# EUROPEAN PATENT APPLICATION

(11) **EP 1 132 833 A2**
(43) Date of publication of application: **12.09.2001**
(21) Application number: 01100134.4
(22) Date of filing: 15.01.2001
(51) Int. Cl.: G06F 17/30

(54) **A method and structure for dynamic conversion of data**

(30) Priority: 14.01.2000 EP 00100211; 14.01.2000 EP 00100212; 14.01.2000 EP 00100740; 14.01.2000 EP 00100739; 14.01.2000 EP 00100738
(71) Applicant: SUN MICROSYSTEMS, INC., Palo Alto, California 94303 (US)
(72) Inventor: Hütsch, Matthias, 22111 Hamburg (DE); Hofmann, Ralf, 22143 Hamburg (DE); Sommerfeld, Kai, 21149 Hamburg (DE); Schulz, Torsten, 25421 Pinneberg (DE); Eilers, Bernd, 21107 Hamburg (DE); Pfohe, Thomas, 22143 Hamburg (DE); Hönnig, Michael, 22143 Hamburg (DE); Meyer, Markus, 21423 Winsen/Luhe (DE)
(74) Representative: HOFFMANN - EITLE

(57) **Abstract**

A filter server receives a request for data, and in responses retrieves a rule set for a plurality of partial filter adapters from a filter registry. A filter is built using said rule set. The filter includes a chain of said plurality of partial filter adapters. Each partial filter adapter includes a generic format independent interface. The generic format independent interface is used in passing data from one partial filter adapter in said plurality of partial filter adapters to another partial filter adapter in said plurality of partial filter adapters.

## Description

### BACKGROUND OF THE INVENTION

### Field of the Invention

The present invention relates generally to data format conversion, and in particular to a method for dynamically converting data having a first data format into data having another data format or alternatively rendering the same data in different ways.

### Description of Related Art

Data is understood to be arrangements of information to be processed by a computer system. The arrangement of information is made in a certain data format. Each data format corresponds to a specific software module or groups of software modules, which support the respective data format. Examples of data formats include the ASCII format and the HTML-format, both being able to be processed by a group of text processing software modules, or the doc-format or the sdw-format, destined to be processed by a specific text processing software module.

Data may be stored on a storage medium, for example, a hard disc, a soft disc or a CD-ROM. If data having a certain data format is retrieved by a user, the user must have access to a computer system utilizing a software module, which supports the data format of this data. In global business, the number of situations grows where a user wants to access data being stored somewhere in a first data format from a computer system supporting data formats that do not include this first data format, or from a computer system with limited capabilities, e.g., no fonts, speech only, that will not permit viewing all the information.

In the prior art, format conversion programs are known which allow the conversion of data from one specific data format to another specific data format. See for example International Publication Number WO 98/53393 entitled "Data Stream Processing on Networked Computer System Lacking Format-Specific Data Processing Resources" of T.V. Raman dated November 26, 1998. However, each data conversion from one specific data format to another specific data format requires a separate converter or in the terms of the cited publication, a parsing server.

This means that a user who wants to be able to read data existing in a certain data format on computer systems supporting other data formats has to make sure that access is provided to a substantial number of converting programs when required. Although, many converting programs are meanwhile available via the Internet at no or low cost, it is nevertheless cumbersome to access these programs when needed. Also, most of these conversion programs are available only for desktop systems, and their executables are dependent upon a specific hardware architecture and/or operating system. Such conversion programs cannot be used on devices like mobile phones or hand-held personal digital assistants.

One solution to this problem was to provide a capability to translate a first data format into an intermediate data format, and then another capability to translate the intermediate data format into a second data format. An example of this approach includes International Publication Number WO 96/37817, entitled "System and Method for Converting Data From a First Data Format to a Second Data Format," of J. Todd Coleman, published on November 28, 1996. However, this system is not useable by someone that does not have computer coding experience. It requires input of a series of commands that define the data in detail. In particular, according to Coleman "The user enters a plurality of commands referred to as MapTo commands, and these commands specify the mappings between fields or parts of tables."

This use of a conversion to and from an intermediate data format reduces the total number of converting programs required. However, conversion between two data formats that requires the complexity disclosed by Coleman is not useful to the average computer user. In general, conversion of every data format into and from only one intermediate format is undesirable. The one intermediate format cannot include all the information required to properly present the data for every desired input or output format. Consequently, the quality of the data conversions is limited by the functionality of the one intermediate format.

### SUMMARY OF THE INVENTION

It is therefore the object of the invention to provide access from an arbitrary computer system to data having an arbitrary data format.

This object of the invention is solved by the features of the independent claims.

According to one embodiment of the present invention, a user transparently accesses data having a format that is different from formats supported by the user's device. In another embodiment, a first computer system transparently transcodes data supplied to a second computer system without user intervention. In yet another embodiment, a user request access to data, but the user is authorized to access only a portion of the source data. Again transparently to the user, the source data is rendered into data for which the user is authorized, i.e., the same data is rendered in a different way. In each of these embodiments, a filter server generates a filter that performs the required task.

In one embodiment, when a filter server receives a request for data, a rule set for a plurality of partial filter adapters is retrieved using a filter registry.
A filter is built using the rule set. The filter includes a chain of the plurality of partial filter adapters. Each partial filter adapter includes a generic format independent interface. The generic format independent interface is used in passing data from one partial filter adapter in the plurality of partial filter adapters to another partial filter adapter in the plurality of partial filter adapters.

In the first embodiment described above, the filter that is constructed converts the data into a format that can be processed on the user's device. In the second embodiment, the constructed filter is used, for example, to substitute information in one document with other information. In the third embodiment, the constructed filter is used to remove data for which the user is not authorized, i.e., the filter renders the source data in a different way to produce the data accessed by the user.

In one embodiment, the generic format independent interface is an event-driven interface. One embodiment of the event-driven interface is a Simple API for XML interface.

In still another embodiment, the partial filter adapters comprise a general partial filter adapter having functionality determined by a parameter. For example, the general partial filter adapter comprises an eXtensible Style sheet Language Transformation processor, and the parameter comprises an eXtensible Style sheet Language Transformation script.

A computer program product, in one embodiment, comprises a medium configured to store or transport computer readable code for a method comprising:
receiving a request for data;
retrieving, from a filter registry in response to the request, a rule set for a plurality of partial filter adapters wherein, upon being chained together the plurality of partial filter adapters converts source data to the data; and
building a filter using the rule set wherein the filter comprises a chain of the plurality of partial filter adapters wherein each partial filter adapter includes a generic format independent interface and the generic format independent interface is used in passing data from one partial filter adapter in the plurality of partial filter adapters to another partial filter adapter in the plurality of partial filter adapters.

A structure, in one embodiment of the present invention includes a partial filter adapter library, and a partial filter adapter registry. The partial filter adapter registry includes a rule set. A filter server is coupled to the partial filter adapter registry and to the partial filter adapter library. The filter server uses the rule set to build a filter using a plurality of partial filter adapters from the partial filter adapter library. Thus, the filter server generates a structure including a first partial filter adapter having a generic format independent interface, and a second partial filter adapter having the generic format independent interface coupled to the first partial filter adapter.

A further method for generating an adapter for converting data from a first data format to a second data format, comprises the steps of:
a) selecting from an adapter library a first partial adapter for converting the data from the first data format to an intermediate data format,
b) selecting from the adapter library a second partial adapter for converting the data from the intermediate data format to the second data format, and
c) combining the first partial adapter and the second partial adapter to generate the adapter for converting the data from the first data format to the second data format.

The method provides access to data having a certain data format regardless of this data format from a computer system which is initially not able to handle and process this data format.

In the first two steps of this method a first partial adapter and a second partial adapter are chosen from an adapter library, which is a collection of adapters on any suitable storage medium. Each of the partial adapters stored in the adapter library is able to convert data from a certain data format into a defined intermediate data format. In many instances partial adapters are also able to reconvert data from the intermediate data format into the above mentioned certain data format, that means they work bi-directional. This intermediate data format may be any data format. It is selected to provide a common basis for converting into and from. For example, the intermediate data format may be an extensible markup language (XML).

The first and second partial adapters are selected according to the concrete conversion requirements of the individual case, that means depending on the first and second data format involved. The selected partial adapters are combined to form the desired adapter for converting data from the first data format to the second data format. This combination is also called binding.

The combination, that means the binding, of the two partial adapters may be dynamic, that means the adapter will not be stored in the computer system carrying out the conversion of data. Instead, the two partial adapters may cooperate by exchanging information in the intermediate data format directly. Therefore, data to be converted from a first data format into a second data format need not exist at any time in a memory of the computer system carrying out the conversion in the form of a complete stream or file of data in the intermediate data format. However, pieces of the stream of file of data may, of course, exist in the intermediate data format at any given point in time.

In an embodiment of this method the adapter is generated in response to a command of a software program supporting the second data format to access the data being stored in the first data format. This means, the creation of the adapter may be on demand. This demand may be automatically posed by the software program or it may be posed only after user interaction with this software program.

In a further embodiment for generating an adapter the second data format may be selected from at least two data formats supported by the mentioned software program. The information about the supported data formats may be given by the software program to the decision device which selects the second data format. This decision device may be implemented in hardware or software and may be located on the first or the second computer system or at any location being accessible to the first or the second computer system. This information about the supported data format may be given directly. However, it may also be given indirectly in that the software program communicates to the decision device its type or nature and the decision device retrieves the information about supported data formats from a data base or any memory in which this information is present in relation to the obtained information about type or nature of the software program. For example, if it is known to the decision device that a certain text processing software program supports a certain data format, it may be sufficient to provide this decision device with the name of the text processing software program in order to give it, indirectly, the required information about the supported data format.

If more than one data format is supported by the software program requesting access to data being stored in a non-supported data format, the selection of the second data format into which the requested data shall be converted may be based on a selection scheme. This may use, as an example, one or more of the following criteria: storage space required by the data in each of the data formats supported by the software program, conversion time for the data from the first data format into each of the data formats supported by the software program. There may be other criteria furthering the aim of providing quick and easy access with a good quality to data stored in a computer system.

In the scope there is also provided a method of using an adapter generated as described above for converting data from a first data format into a second data format.

Further, a method for rendering accessible data stored in a first data format in a first computer system to a second computer system supporting a second data format is provided, which method comprises at least the following steps:
a) receiving in the first computer system a request from the second computer system for the data,
b) receiving in the first computer system information about at least one data format supported by the second computer system,
c) selecting the second data format, if in step b) the first computer system was informed about more than one data format supported by the second computer system,
d) comparing in the first computer system the first data format with the second data format,
e) generating an adapter for converting the data from the first data format into the second data format, if the first data format is incompatible with the second data format, by combining a first partial adapter for the transformation of data from the first data format to an intermediate data format and a second partial adapter for the transformation of data from the intermediate data format to the second data format,
f) converting the data in the first computer system by means of the generated adapter from the first data format into the second data format,
g) transmitting the converted data from the first computer system to the second computer system.

The data which shall be accessed is stored in a first data format on a storage medium of the first computer system. This storage medium may be any type of memory, including a hard disk, a soft disk, a tape or a CD-ROM. The first computer system is a computer system which has access or is able to set up access to this storage medium, for example, via a permanent or an intermediate network or data channel. In this context a data channel is understood to be any real or virtual connection for the transfer of data. This first computer system comprises, besides the storage medium, at least a processor for converting data, if necessary, from one data format to another data format. The further structure and the location of this first computer system is not pertinent to the present invention. The first computer system may comprise a server with large-scale storage capacity for data and with high-rate data transfer options for data not immediately accessible within the first computer system.

The second computer system may be any computer system suitable for processing data, that means for at least retrieving, i.e. opening for reading or changing data. The second computer system must be connectable to the first computer system for the transmission of data. This connection can be achieved by any suitable data channel, including permanent and temporary data channels, like any kind of real or virtual network. In one example, the first and the second computer system may be of comparable size and have comparable tasks in this network, in another example, they may have the tasks of a server and a client, respectively. However, it may also be sufficient to employ removable data carriers, which will be physically exchanged between the first computer system and the second computer system, as the data connection. It is even possible that the first computer system and the second computer system are fully integrated parts of a complete computer solution. They may even employ the same processor and the same storage medium, so that they may as well be considered to be the same computer.

The second computer system may support one or several data formats, which may or may not be identical with the first data format in which the data- which shall be accessed by or via the second computer system - stored on the first computer system.

In the first step, the second computer system may request from the first computer system the data to be accessed by sending a corresponding request message to the first computer system. This request message may be sent by any suitable means, including via the data connection which is provided for exchanging data between the first and the second computer system.

Then, the first computer system is informed about at least one data format which is supported by the second computer system. This information may come from any source. For example, the second computer system may send this information, for example, together with the above described request for the data. However, this information may as well be present in the first computer system or any computer or storage system accessible for the first computer system, before the second computer system requests the data from the first computer system. In this case, the first computer system may retrieve or obtain the relevant information itself or by any suitable function, as soon as the second computer system requests the data.

The second computer system may support, as described earlier, one or more data formats. If a plurality of data formats is supported by the second computer system, the first computer system may be informed about only one or several selected or all of these compatible data formats, depending on the aim of the second computer system, or its programmer or user, respectively, as to which data format shall be requested or accepted. For example, the second computer system may work according to the scheme that a certain data format shall be preferred, and only in case this data format is not available, with or without conversion, then some other data format shall be accepted, that means may be requested from a first computer system, for example, a central server unit. The decision about a preferred data format may be carried out in the second computer system according to suitable criteria, for example, the criteria described below.

The information of the first computer system about any data formats supported by the second computer system may be effected indirectly, in that the first computer system merely receives information about a software module on the second computer system for which or by which the data is requested from the first computer system. In this case, the first computer system must have access to information as to which data formats are supported by this software module. This information may be stored in the first computer system, but it may be stored as well outside in a form which is accessible to the first computer system.

In the next step, the first computer system may select the second data format into which the requested data shall be converted, if the need to do so arises. This step only has to be carried out, if the first computer system was informed about more than one data format supported by the second computer system. This selection may be made arbitrarily, as well as according to any suitable criteria, for example the following: storage space required by the data in each of the data formats supported by the second computer system, transmission time from the first computer system to the second computer system for the data in each of the data formats supported by the second computer system, conversion time for the data from the first data format into each of the data formats supported by the second computer system. Other criteria may be more business-oriented, for example, the support of certain, may be own, data formats or may consider the quality of the conversion.

After having been informed about or having selected, respectively, the second data format, the first computer system compares the first data format, in which the requested data is presently stored on the first computer system, with the second data format in which the data format shall be forwarded to the second computer system. If these data formats are not compatible, the first computer system decides to convert the requested data from the first into the second data format.

For this conversion the first computer system generates an adapter for converting the required data from the first data format into the second data format, as it was described above.

The advantage of the present invention is, that the partial adapter library comprises only adapters from certain data formats to a convenient intermediate data format and vice versa, but not each and every cross-connection from any first to any second data format required by prior art solutions. If a new data format should be supported by the prior art solution, as many conversion adapters have to be provided as data formats exist. According to the present invention, however, only two new adapters have to be added to the existing library, one for converting the new data format into the intermediate format, another for converting the intermediate format into the new data format.

The generated adapter generally works as one adapter, that means there will be no intermediate data in the intermediate data format. However, specific reasons may exist to store such an intermediate data in a storage of the first computer system. A reason for such a solution may be insufficient buffer space in the conversion processor, or, considering the situation from the point of view of the data to be converted, this data may be too long to be converted in one step.

The standard intermediate data format may be an extensible markup language, generally designated with the letters XML. It will be understood that the invention is not limited to the present definition of a XML standard language.

After applying the generated adapter, the first computer system transmits the converted data to the second computer system via any kind of data connection. Herewith, the user of the second computer system is able to access the desired data in the required data format without the need to have a variety of converter programs at hand.

In the further course of action the generated adapter may be maintained and stored in the first computer system or any storage system related to this first computer system. However, it may be advantageous, with respect to storage management, to abandon the generated adapter and newly create it if a similar conversion task arises.

In the scope a method is also provided for rendering accessible data stored in a first data format in a first computer system to a second computer system supporting a second data format, comprising the steps of:
a) receiving in said first computer system a request from said second computer system for said data,
b) informing said second computer system about said first data format of said requested data,
c) selecting said second data format, if said second computer system supports more than one data format,
d) comparing said first data format with said second data format,
e) generating an adapter for converting said data from said first data format into said second data format, if said first data format is incompatible with said second data format, by combining a first partial adapter for the transformation of data from said first data format to an intermediate data format and a second partial adapter for the transformation of data from said intermediate data format to said second data format,
f) converting said data by means of said generated adapter from said first data format into said second data format,
g) accessing said converted data by said second computer system.

Herein, the second computer system chooses among several supported data formats the second data format into which the data being present in the first data format shall be converted. The information about the first data format in which the requested data are stored may be provided by the first computer system, but it may also come from every other source connected to the second computer system. The comparison step between the first data format and the selected second data format may be carried out in the first or the second computer system or on any other computer system being accessible either the first or the second computer system.

Further, a method for rendering accessible data stored in a first data format in a first computer system to a second computer system supporting a second data format is provided, which method comprises at least the following steps:
a) receiving in the first computer system a request from the second computer system for the data,
b) transmitting the requested data from the first computer system to the second computer system,
c) so that the second computer system is able to select the second data format, if it supports more than one data format,
d) wherein the second computer system is able to compare the first data format with the second data format,
e) wherein the second computer system is able to generate an adapter for converting the data from the first data format into the second data format, if the first data format is incompatible with the second data format, by operatively connecting a first partial adapter for the transformation of data from the first data format to an intermediate data format and a second partial adapter for the transformation of data from the intermediate data format to the second data format,
f) wherein the second computer system is able to convert the data by means of the generated adapter from the first data format into the second data format.

The steps of selecting, comparing, generating and converting may be carried out by the first computer system or by the second computer system. It may be also possible that these two computer systems cooperate by carrying out some of the steps in one computer system and some other steps in the other computer system.

There is also provided a method for using a second computer system supporting a second data format for accessing data being stored in a first data format on a first computer system, comprising the following steps:
a) requesting from the first computer system the data,
b) informing the first computer system about at least one data format supported by the second computer system,
c) so that the first computer system is able to select the second data format, if it was informed about more than one data format supported by the second computer system,
d) wherein the first computer system is able to compare the first data format with the second data format,
e) wherein the first computer system is able to generate an adapter for converting the data from the first data format into the second data format, if the first data format is incompatible with the second data format, by operatively connecting a first partial adapter for the transformation of data from the first data format to an intermediate data format and a second partial adapter for the transformation of data from the intermediate data format to the second data format,
f) wherein the first computer system is able to convert the data by means of the generated adapter from the first data format into the second data format,
g) receiving the converted data from the first computer system in the second computer system.

The last described method for using a second computer system requires a second computer system which is able to process data, but which may be very limited in its functionalities. For example, the second computer system may be a thin client which cooperates, as described, with a large server forming the first computer system. With this method of use the second computer system may be used in a particularly advantageous way.

There is also provided a method for using a second computer system supporting a second data format for accessing data being stored in a first data format on a first computer system, comprising the following steps:
a) requesting from the first computer system the data,
b) receiving the requested data from the first computer system in the second computer system,
c) selecting the second data format, if the second computer system supports more than one data format,
d) comparing in the second computer system the first data format with the second data format,
e) generating an adapter for converting the data from the first data format into the second data format, if the first data format is incompatible with the second data format, by combining a first partial adapter for the transformation of data from the first data format to an intermediate data format and a second partial adapter for the transformation of data from the intermediate data format to the second data format,
f) converting the data in the second computer system by means of the generated adapter from the first data format into the second data format.

Also, a method may be provided employing an adapter generated by more than two partial adapters. Herein, at least one further partial adapter is used for converting said data from said intermediate data format into a further intermediate data format, wherein said first partial adapter is able to convert said data from said first data format into said intermediate data format and said second partial adapter is able to convert said data from said further intermediate data format into said second data format. The number of further partial adapters may be very high and depends on the specific implementation requirements for the inventive method.

The operations may be implemented in a computer program (computer program product), including comprehensive office applications. A computer program product comprises a medium configured to store or transport computer readable code, or in which computer readable code may be embedded. Some examples of computer program product are: CD-ROM disks, ROM-cards, floppy disks, magnetic tapes, computer hard drives, servers on a network and carrier waves and digital signals transmitted over a telecommunication link or network connection.

Such a computer program may be stored on any common data carrier like, for example, a floppy disk or a compact disk (CD), as well as on any common computer system's storage facilities, like hard disks. Therefore, the present invention also relates to a data carrier for storing a computer program for carrying out the inventive method. The present invention also relates to a method for using a standard computer system for carrying out the present inventive method.

Furthermore, stored data structures are provided, comprising a set of partial adapters, wherein each partial adapter of the set of partial adapters is capable of converting data between a certain data format and an intermediate data format. Therein, each partial adapter being capable of converting data between a first data format and the intermediate data format may be combined with each other partial adapter being capable of converting data between a second data format and the intermediate data format in order to produce an adapter being capable of converting data between the first data format and the second data format.

### BRIEF DESCRIPTION OF THE DRAWINGS

- Fig. 1A:: is a high level diagram of a computer network system that includes one embodiment of the filter server of the present invention.
- Fig. 1B:: is a high level diagram of a computer system that includes one embodiment of the filter server of the present invention.
- Fig. 2:: is a block diagram of a filter built according to one embodiment of the present invention.
- Fig. 3:: is a block diagram of one embodiment of the filter server of the present invention.
- Fig. 4:: is a process flow diagram of one embodiment of processing a data conversion request by the filter server of Figure 3.
- Fig. 5:: is a process flow diagram of one embodiment for using the dynamic data conversion process of the present invention.
- Figs. 6A to 6C:: are three embodiments of filters generated using a plurality of partial filter adapters with a generic format independent interface for passing data from one partial filter adapter to the next partial filter adapter.
- Fig. 7A:: is a first embodiment of a use for a filter constructed using the filter server of Figure 3.
- Fig. 7B:: is a second embodiment of a use for a filter constructed using the filter server of Figure 3.
- Fig. 7C:: is a third embodiment of a use for a filter constructed using the filter server of Figure 3.
- Fig. 7D:: is a fourth embodiment of a use for a filter constructed using the filter server of Figure 3.
- Fig. 8:: schematic diagram of a hardware system for applying the inventive method
- Fig. 9:: flow chart representing the method for rendering accessible data stored in a first data format in a first computer system to a second computer system supporting a second data format according to the present invention
- Fig. 10:: flow chart representing the generation of an adapter for converting data from a first data format into a second data format according to the present invention
- Fig. 11:: flow chart representing the conversion of data from a first data format to a second data format using an adapter generated with a method according to the present invention
- Fig. 12:: schematic diagram of a client-server system for carrying out the method steps shown in Fig. 10 and Fig. 11
- Fig. 13:: flow chart representing the steps of the method according to the present invention by employing two computer systems
- Fig. 14:: flow chart representing the steps of the method according to the present invention by employing one computer system
- Fig. 15:: flow chart representing the generation of the adapter
- Fig. 16:: schematic diagram of examples of combinations of partial adapters

In the Figures and the following Detailed Description, elements with the same reference numeral are the same element or similar elements. Also, the first one or two digits of a reference numeral for an element indicate the figure in which that element first appeared. Herein, italics are used only to aid in reading the disclosure. A word in italics and the same word not in italics represent the same thing and are the same word.

### DETAILED DESCRIPTION

According to one embodiment of the present invention, a user can access the user's data or other data of interest to and available to the user from any one of a plurality of user devices 102A to 102F. When a first computer program executing on a user device, e.g., device 102A, issues a request for data, in response to a user input, the request is received by a second computer program, e.g., web server 111, executing on another computer system, e.g., server system 100.

If the requested data has a format that can be processed by the first computer program, second computer program 111 simply retrieves the requested data and sends that data to user device 102A. However, if the requested data has a format that cannot be processed by the first computer program, second computer program 111 passes the data request to a filter server 120 of this invention.

In one embodiment, as explained more completely below, filter server 120 determines data formats that can be processed by the first computer program. Filter server 120 also determines the data format of the requested data. Using the two data formats, filter server 120 dynamically creates a data filter that in turn converts the format of the requested data to one of the formats that can be processed by the first computer program.

With filter server 120, the user is no longer restricted to retrieving data on user devices that support the same application that was originally used to store the data. Moreover, the user is unaware that filter server 120 is utilized, because filter server 120 is automatically called when the services of filter server 120 are required. Consequently, filter server 120 eliminates prior art limitations on accessing data from a wide variety of user devices.

Filter server 120 is used not only to convert documents based upon a request from a user device, but also to convert documents in response to a request from another computer system without user interaction. For example, in a business-to-business environment, filter server 120 is used to transcode data, which changes the data while the data is being processed. For example, a filter supplied by filter server 120 is used to substitute part numbers in one document with the required order numbers for the supplier.

In still another application, filter server 120 does not convert a document from a source data format to a target data format, but rather allows the rendering of the same data in different ways. For example, a user, who is not authorized to view a complete spreadsheet, sees only a particular set of rows of the spreadsheet when the complete spreadsheet is processed with a filter supplied by filter server 120.

For example, in one embodiment, a user may store an address-list as a part of a schedule program via a workstation 102C connected to enterprise network 103. The address-list for the schedule program is stored in user documents on a storage device 113 of server system 100 that also is connected to enterprise network 103. The source format of the stored address-list is determined by the schedule program.

While visiting a friend, the user wants to access the address-list, but the friend has only a home personal computer (PC) 102D available, which uses a different operating system and a different suite of programs than those available to the user via workstation 102C. Nevertheless, the user is able to access the stored address-list by using a browser, the first computer program referred to above, executing on the friend's home personal computer 102D. Via an Internet service provider, the user contacts server system 100 and requests the address-list using the browser on personal computer 102D.

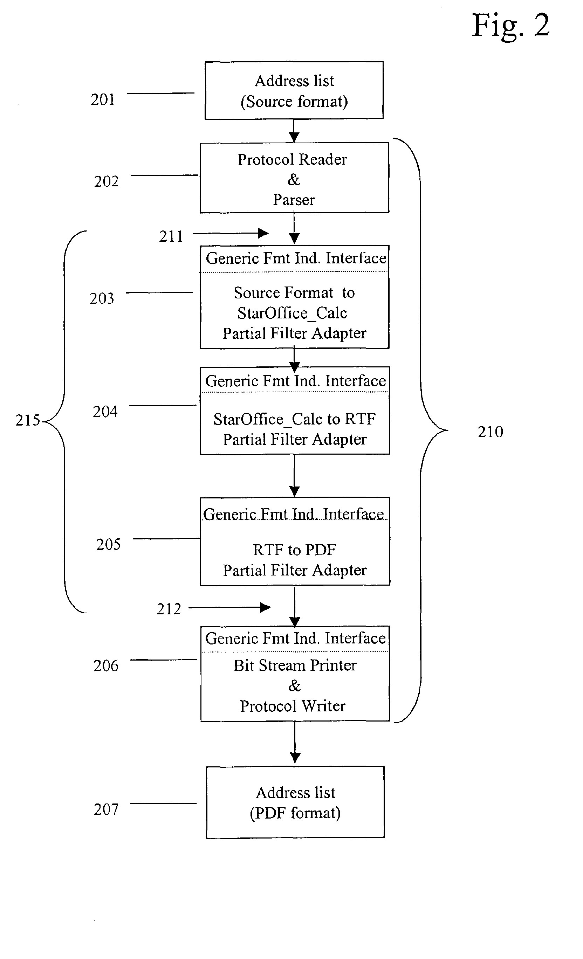

In response to the user request, in this embodiment, web server 111 sends a request that includes at least one MIME type supported by the browser on PC 102D and an address of the requested document to filter server 120. As explained more completely below, filter server 120 builds a filter 210 (Fig. 2) that can read the data from address list 201, dynamically convert the read data using a partial filter adapter chain 215 to the new format, and then write the converted data in the new format so that the data can be sent to the user.

More specifically, in response to the request from web server 111, filter server 120 via conversion service 125 causes a protocol reader 202(Fig. 2) to be instantiated and uses the protocol reader to access requested document 201 to determine the format of the requested data. With the source document data format and the target document data format, i.e., the MIME type received in the original user request, filter server 120 can build a filter 210 for converting the format of source document 201 to the format of the target document. In this example, address-list 201 was generated using a contact manager and so source document 201 has a format that, for purposes of illustration, is called the source format. A MIME type in the request, i.e., the target format, was Portable Document Format (PDF).

As explained more completely below, in one embodiment, filter server 120 accesses a filter registry 127 to generate a filter map of partial filter adapters that can be chained together to convert the format of address-list 201 to the PDF MIME type specified in the request. A filter map is an example of a rule set for constructing a chain of partial filter adapters that perform a desired data conversion.

In this example, the map of partial filter adapters includes three partial filter adapters 203 to 205. A first partial filter adapter 203 converts data in the source format to data in STAROFFICE Calc format. (STAROFFICE is a trademark of Sun Microsystems, Inc. of Palo Alto, CA) A second partial filter adapter 204 converts data in STAROFFICE Calc format to data in the rich text format (RTF). A third partial filter adapter 205 converts data from the RTF format to the target PDF format.

Using the filter map, filter server 120 calls a service to instantiate each partial filter adapter in the map, e.g., instantiate each of partial filter adapters 203 to 205, using partial filter adapter library 126. Filter server 120 calls another service to chain the three partial filter adapters together using a chaining application programming interface of each partial filter adapter.

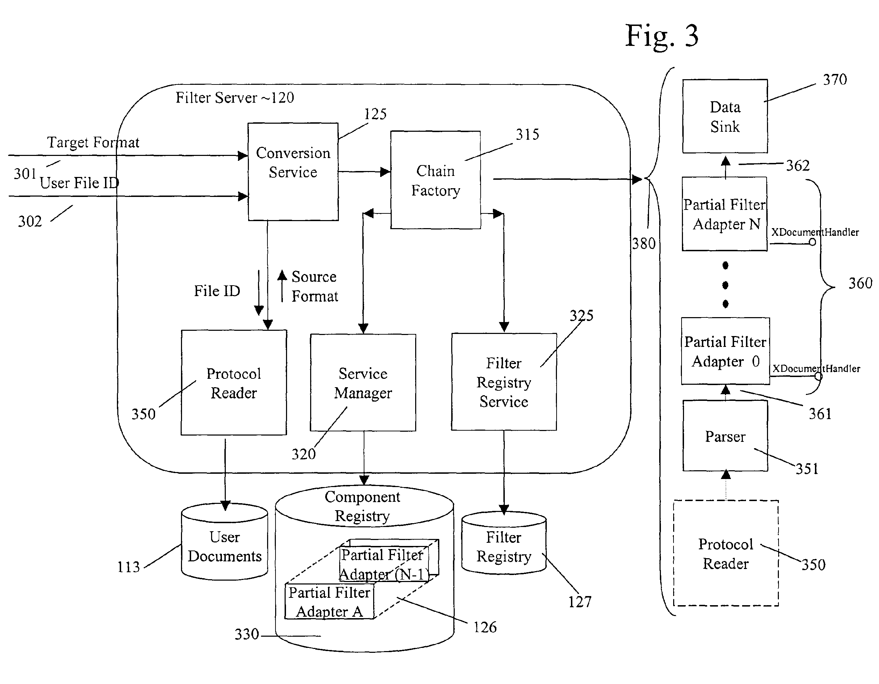

In this embodiment, filter server 120 via conversion service 125 constructs a data filter 210 (Fig. 3) by gluing a protocol read and parser unit 202 to an input end 211 of partial filter adapter chain 215 and a byte stream printer and protocol writer 206 to an output end 212 of chain 215 and thereby constructs filter 210. In more general, terms a data sink is glued to output end 212. The data sink converts the data presented via an event-based API to a byte stream that can be used by an application, or other process.

In the example of Figure 2, after construction of filter 210, conversion service 125 uses filter 210 to process file 201. Specifically, source file 201, which was specified in the request from user device 102D, is read by a protocol reader, and if necessary, a parser parsers the input data read by the protocol reader to provide an event-based data stream to a source format to STAROFFICE Calc partial filter adapter 203. The output data from partial filter adapter 203 is provided via a generic format independent interface to a STAROFFICE Calc to RTF partial filter adapter 204. The output data from filter 204 is provided via the same generic format independent interface to RTF to PDF partial filter adapter 205.

The output data from partial filter adapter 205 is passed to byte stream printer and protocol writer 206. The byte stream printer converts the PDF data in the event-based API from partial filter adapter 205 to a byte stream and the protocol writer writes that byte stream to a memory either for storage or for transfer to user device 102D. In this example, filter 210 generates an address-list file 207 with a PDF format. File 207 is returned to web server 111, which in turn sends file 207 to user device 102D for display. Thus, the user is able to view the address-list without having access to the application that was used to generate the address-list.

One important aspect of this invention is that each partial filter adapter utilizes the same generic format independent interface to receive input data. Format independent here means that the interface is independent of the particular source and target formats as well as the underlying data formats associated with a particular partial filter adapter. This allows any one partial filter adapter to be connected to another partial filter adapter without concern for the particular underlying format of the data output by the first partial filter adapter. In one embodiment, as explained more completely below, the generic format independent interface is a Simple API for XML (SAX) interface, and the data format of the input data is XML. The underlying data format is defined by a Document Type Definition (DTD) identifier.

In one embodiment, filter 210 is used dynamically, which means that the complete data file is not stored in intermediate stages. Rather, the output from a first partial filter adapter is input to a second partial filter adapter before all the data has been processed by the first partial filter adapter.

As explained more completely below, in one embodiment, each partial filter adapter has two application programming interfaces. A first interface is the generic format independent interface event-based API that permits transfer of data from one partial filter adapter to another partial filter independent of the specific underlying format of the transferred data. A second interface is a chainable interface that allows chaining the partial filter adapters together. In another embodiment, the two interfaces are the same interface.

The combination of the two interfaces for each partial filter adapter permits dynamic building of a wide variety of filters. More importantly, data can be passed from one partial filter adapter to another partial filter adapter within a filter without waiting for one partial filter adapter to convert all the data from one format to another. This reduces the memory requirements for the data conversion.

The previous example assumed that the user requested data for display on user device 102D and that the user only wanted to view the requested data. However, alternatively, a user may be executing an application 112 or other service on server system 100, and the user directs application 112 to open a data file in a format different from the formats supported by application 112. In this case, the user wants to modify the data and then to store the modified data in its original format.

Upon application 112 determining that the requested data file has a format other than a format that can be processed by application 112, application 112 issues a request to filter server 120 that proceeds as described above. However, in this example, filter server 120 constructs a dynamic filter that is bi-directional, so that the original format of the requested data is changed to a new format using the filter in a first direction. The data in the new format is processed using application 112, and then the same dynamic filter is used in a second direction, opposite to the first direction, to store the processed data in the original format. Alternatively, two different filters could be used one for each direction. In some embodiments, the bi-directional data conversion may potentially lead to some information loss.

Hence, with filter server 120, a user can access data on Internet 106 and/or enterprise network 103 from almost any available device, e.g., any one of portable computer 102A, a mobile telephone 102B, a workstation 102C, a home personal computer (PC) 102D, a personal digital assistant 102E, or an Internet café machine 102F. No longer is a user limited to using a particular device with pre-installed software to access data with a particular format, or limited to using special devices, which support all capabilities needed to process the whole document.

As a further example, consider that a user taps an icon displayed on PDA 102E to generate a request for a sales report that is stored in a database in enterprise network 103. The request is sent over Internet 106 to server system 100 that, in turn, retrieves the sales report, dynamically builds a filter to convert the format of the sale report to another format that can be displayed on PDA 102E, and transmits the converted sales report to be displayed on PDA 102E. A similar transaction could be done using Internet café machine 102F, or perhaps mobile telephone 102D.

Plurality of devices 102A to 102F is illustrative only and is not intended to limit the invention to the particular devices illustrated. The devices could also include, for example, a POTS telephone, a pager, a set-top box connected to a television, a network appliance, or any other device that is connectable to a network and can issue a request for data, as described more completely below, and display the data received in response to the request.

In one embodiment, a request from a user device 102i, where user device 102i can be any one of the plurality of user devices 102A to 102F, specifies (i) a suitable address to the location where the content associated with the request is stored, for example, an address in the form of a uniform resource locator (URL), and (ii) information concerning either the types of data that can be processed and displayed by user device 102i, e.g., MIME types, or alternatively applications available on the device to process and display data.

In another embodiment, the request includes the data to be converted in place of the storage location address.

Enterprise network 103 is illustrative only of one embodiment of a network. The particular type of network connecting a user device 102i to server system 100 is not essential, and may be the Internet or any other permanent or temporary network, for example a local area network.

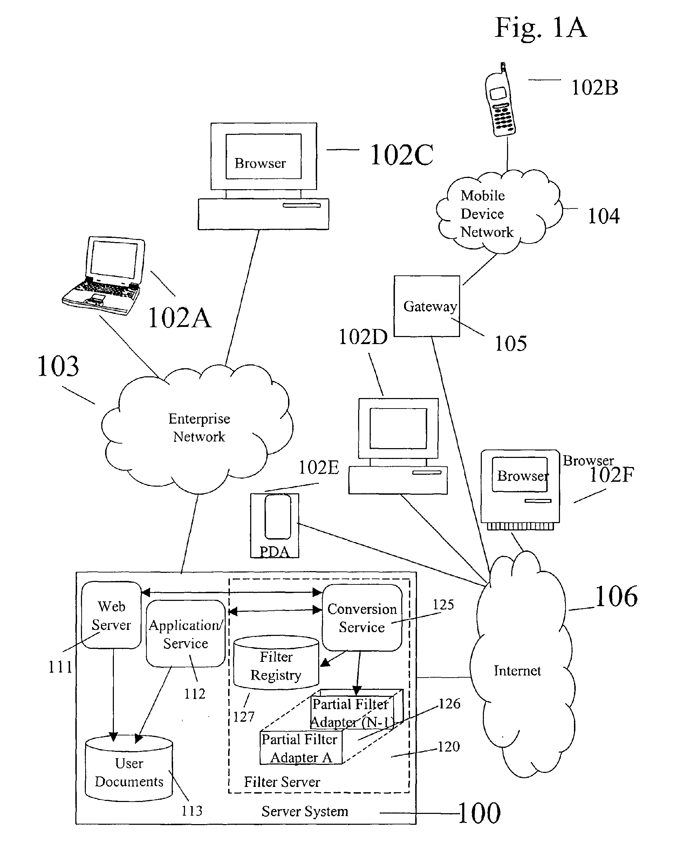

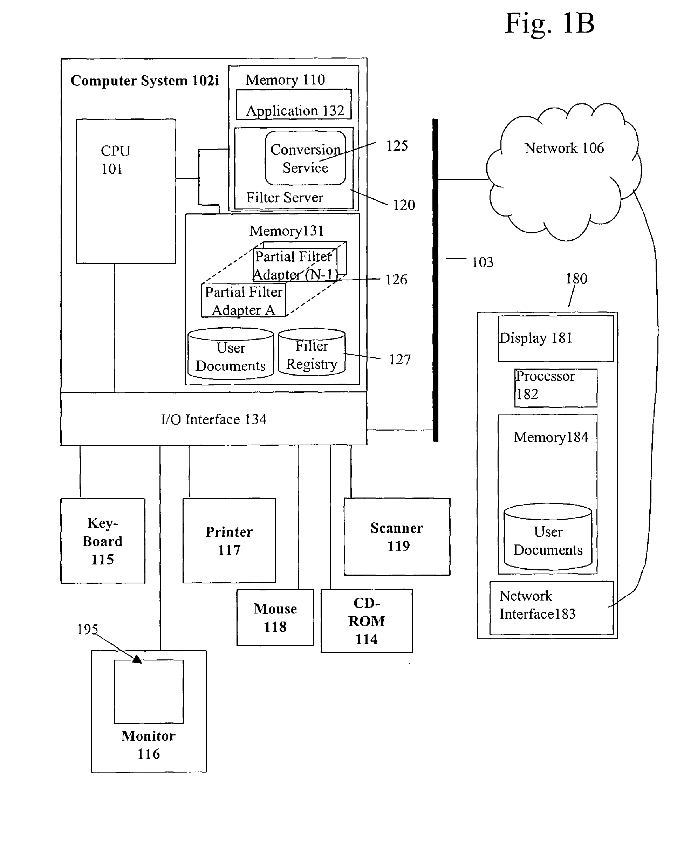

In the embodiment of Figure 1A, filter server 120 was included in a server system 100. In the embodiment of Figure 1B, filter server 120 is included on a user device 102i. In the embodiment of Figure 1B, the memory of computer system 102i is divided into a volatile memory 110, like a working memory, and a non-volatile memory 131, like a hard disc. Filter server 120 is stored in memory 110, while partial filter adapter library 126 and filter registry 127 are stored in non-volatile memory 131. Of course, all or part of filter server 120 could also be stored in memory 131 and executed directly from memory 131, or alternatively, portions or modules of filter server 120, e.g., conversion service 125, could be loaded in memory 110 and executed as needed.

In this example, computer system 102i also includes keyboard 115, and monitor 116, that are connected to processor 101 via I/O interface 132. Computer system 100 also may have, for example, a printer 117, a mouse 118, a scanner 119 and CD-ROM 114 connected to I/O interface 134. Frequently, computer system 102i also is connected to a network 103 via I/O interface 134. Optionally, network 103 can be connected to, or part of a larger network 106, for example, the Internet or a wide area network.

If application 132 that is executing on processor 101 needs access to data that is in a format other than a format that can be opened by application 132, application 132 issues a request for the data to filter server 120 that proceeds as described above in this embodiment.

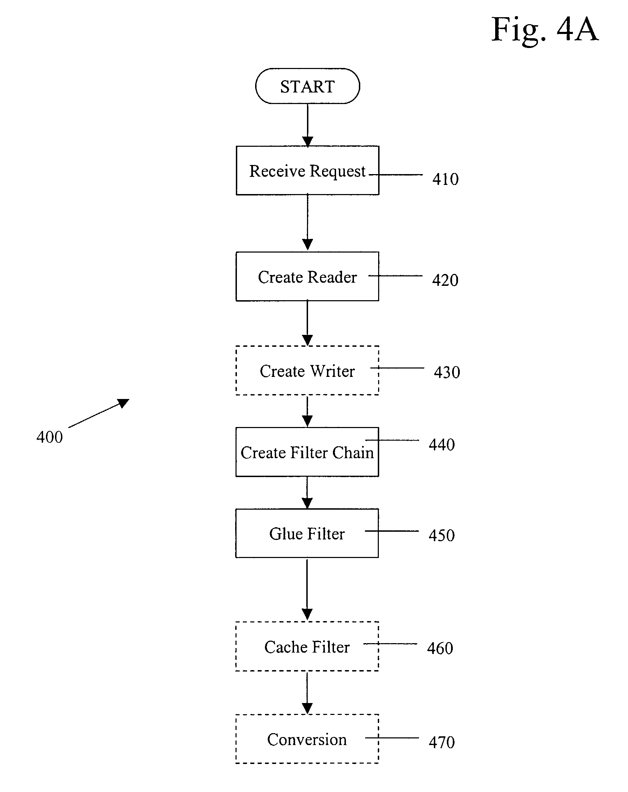

Figure 3 is a block diagram of modules used in the process of building a chain 360 of partial filter adapters 0 to N by filter server 120. In this embodiment, in receive request operation 410 (Fig. 4A), conversion service 125 receives as a first input one or more data format types 301 that are specified, for example, by a character string identifier like a MIME type, or by a Document Type Definition (DTD) identifier from user device 102i, and in one embodiment from an importer for a target component of user device 102i. Herein, the importer and the target component may be one single component. The request from user device 102i and consequently the request to filter server 120 may include quality indicators (priority) for the input data format types 301. Conversion service 125 receives, as a second input 302, a source data identifier, which is illustrated in Figure 3 as a user file ID. This can be a uniform resource locator, a document path, or in one embodiment, the document itself that is to be converted either as a data stream or in memory.

In the above examples, filter registry 127 was described as providing a filter map. However, this is illustrative only and is not intended to limit the invention to this particular embodiment. In general, a filter map is an example of a set of rules for constructing a filter that converts data from a first format to a second format, or constructing a filter that renders the same data in a different way. The set of rules could be defined, for example, using a XML decision tree or a computer programming language such as PROLOG.

Also, in one embodiment, library 126 includes general partial filter adapters. The function of a general partial filter adapter is controlled by a parameter or a set of parameters. One example of a general partial filter adapter is an eXtensible Style sheet Language Transformation (XSLT) processor. A XSLT script is used to define how this general partial filter adapter, i.e., the XSLT-processor, processes the data. Thus, by providing different scripts, the same general partial filter adapter can be used for different format conversions and/or filtering. In this case, the same general partial filter adapter is reused in building a filter, but the function of each general partial filter adapter in the filter is controlled by a different XSLT script. In this case, the XSLT script is the parameter for the partial filter adapter. In this example, the set of rules includes an identifier for the XSLT script that is to be used to construct a particular partial filter adapter.

In the embodiment of Figure 3, conversion service 125 sets up a protocol reader 350 in create reader operation 420 to determine the source data format. Conversion service 125 passes the source data identifier, or at least a part of the source data identifier to protocol reader 350.

Protocol reader 350 retrieves the format of the source data. Some protocols like HTTP provide a MIME type directly and so protocol reader 350 simply retrieves the MIME type. For other protocols, format detection components, which read header information from the source data file itself, are needed in protocol reader 350. Protocol readers are known to those of skill in the art. In either case, conversion service 125 receives the format of the source data corresponding to the source data identifier from protocol reader 350. In another embodiment, the source data format is an input to conversion service 125.

Upon determining the source data format, in create reader operation 420, processing passes to an optional create writer operation 420, in one embodiment. At this point, conversion service 125 knows the target data format. As explained more completely below, conversion service 125 can transmit the converted data to an importer in a number of ways. The output data stream from the last partial filter adapter is presented via an event-based API. Typically, a byte stream printer is needed to convert the data presented via the event-based API to a byte stream that can be processed by other than an event-based API. Also, a protocol writer may be needed. Thus, create writer operation 403 creates a byte stream printer and/or protocol writer, if these components are needed to complete the filter for the data conversion. If neither of these components is needed, operation 420 transfers processing directly to operation 440 and otherwise operation 430 transfers processing directly to operation 440.

Conversion service 125 calls a chain factory 315 with at least the source data format and the target data format in create filter chain operation 440. Chain factory 315 calls filter registry service 325 and provides the source and target formats to service 325. Filter registry service 325 using filter registry 127 finds a chain of partial filter adapters, which is suitable for the conversion of data from the source data format to the target data format, e.g., from a first data format to a second data format. In another embodiment, service 325 finds a chain of filters to transcode the data, or alternatively to render the data in a different way.

In one embodiment of filter registry 127, each entry in registry 127 includes a identifier of the partial filter adapter, the source data format for that partial filter adapter, the target data format for that partial filter adapter, for example, by a MIME type or a DTD identifier, and an activation identifier. The entry also may contain quality indicators (priorities) as well as other attributes or options such as extract/strip/erase.

The particular chain chosen depends upon the information provided to filter registry service 325 and the information in filter registry 127. Note as indicated above, if filter registry service 325 receives more than one target data format, service 325 uses a selection scheme to select the target data format.

The selection scheme uses, as an example, one or more of the following criterion: storage space required by the data in each of the data formats supported by the software program on user device 102i used to process the data; and conversion time from the first data format into each of the data formats supported by the software program or programs on user device 102i. There may be other criteria furthering the aim of providing quick and easy access with a good quality to data stored in a computer system. If there are no other constraints, a chain with the least number of partial filter adapters is selected. In all cases, a descriptive representation of the partial filter adapter chain is returned to chain factory 315 by filter registry service 325 in create filter chain operation 440.

Next in create filter chain operation 440, chain factory 315 passes the descriptive representation of each partial filter adapter in the chain to service manager 320 in a request to activate each partial filter adapter. Service manager 320 accesses each partial filter adapter in library 126 within component registry 330 and instantiates the partial filter adapter, and returns a pointer to the partial filter adapter to chain factory 315.

After service manager 320 instantiates each partial filter adapter, chain factory 315 creates a partial filter adapter chain 360 by connecting the newly created partial filter adapters together. The chain connections are built by using an interface of each partial filter adapter. As explained above, in one embodiment, each partial filter adapter includes a chainable API and this API is used to connect each partial filter adapter to the next partial filter adapter in the chain.

In one embodiment, the chaining is done by setting a Simple API for XML (SAX) interface *XDocumentHandler* (See Table 8) of each successor partial filter adapter to the predecessor's partial filter adapter. One embodiment of the methods in the SAX interface *XDocumentHandler* is described more completely below. Upon completion of chain 360, create filter chain operation 440 returns chain 360 to conversion service 125 and processing transfers from operation 440 to glue filter operation 450.

In glue filter operation 450, conversion service 125 connects protocol reader 350 and parser 351 to input end 361 of chain 360. Conversion service 125 also connects a data sink 370, e.g., a byte stream printer and protocol writer generated in create writer operation 430 to output end 362 of chain 360 to complete generation of filter 380.

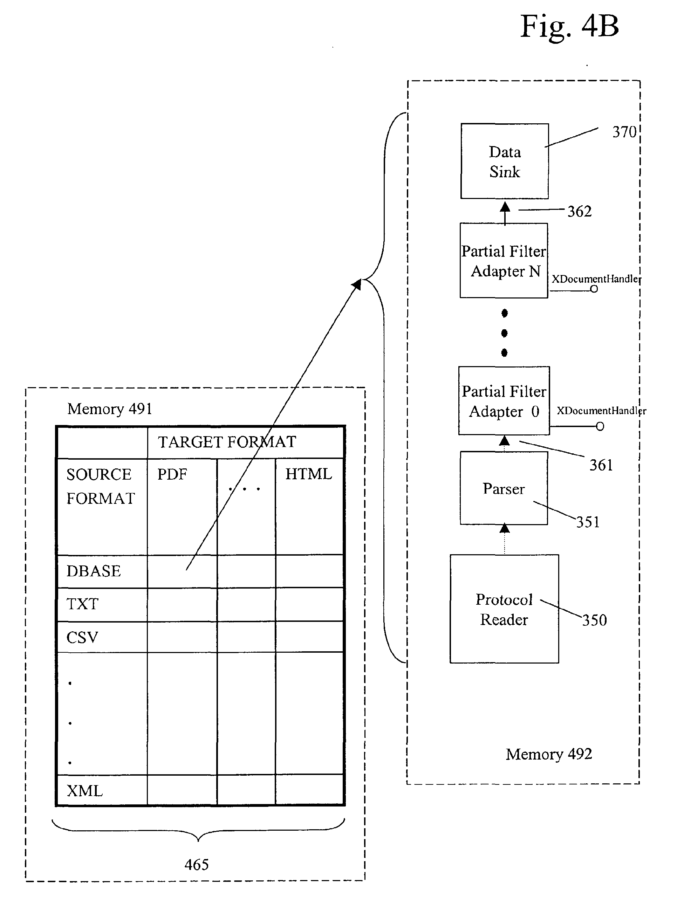

In one embodiment, conversion service 125 caches a pointer to completed filter 380 so that any subsequent calls that require the data conversion performed by filter 380 can be completed without building another filter. An example of such a cache for filter 380 is presented in Fig. 4B. For this example, it is assumed that filter 380 performs the dBase to PDF conversion described above. In this embodiment, cache 465 in memory 491 is a two-input look-up table. Use of a lookup table is illustrative only and is not intended to limit the invention to this particular embodiment.

For two-input lookup table 465, a first input, the source format, provides an index that is used to address a row of lookup table 465. A second input, the target format, is another index that is used to address a column of lookup table 465. Here, the source format is the format in which the requested data is stored, and the target format is the format of the data that can be processed by the computer system receiving the data.

The cell of lookup table 465 at the intersection of the addressed row and column contains the pointer to the filter the source and target formats. In this example, the pointer to filter 380 is at the intersection of the row for a source dBase format and the column for a target PDF format. If the filter generated by filter server 120 is not cached, cache filter operation 460 is not included in the process, and processing transfers from glue filter operation directly to conversion operation 470.

Conversion operation 470 may be performed by conversion service 125. In this case, conversion service 125 uses filter 380 to convert the specified file from the source format to the target format. Alternatively, conversion service 125 can return either filter 380 or a pointer to filter 380 to another process or application, and that process or application user filter 380 to perform conversion operation 470.

In conversion operation 470, filter 380 converts data from the first data format to the second data format. According to one embodiment of this invention, complete filter 380 is not stored in it entirety all at one time in dynamic memory of the computer system carrying out the conversion of data. Instead, each partial filter adapter, in turn, cooperates with the next partial filter adapter by exchanging directly information in an intermediate data format. Therefore, as the data is converted from the first data format into the second data format, a complete stream or file of data in the intermediate data format, or intermediate data formats, need not exist at any time in a memory of the computer system carrying out the conversion. However, pieces of the stream of file of data in the intermediate data format, of course, may exist at any given point in time.

In the previous description, each partial filter adapter was described as converting input data in one format to input data in another format. However, partial filter adapters are not limited solely to format conversion. Alternatively, a partial filter adapter can strip information contained in the data, which is not relevant for the representation of the data in the output data format. For example, if the computer software program supporting the second data format and running on the second computer system is programmed to exclusively present an outline of the original source data, a partial filter adapter is used strip all detailed information from the data, e.g., all but the outline is stripped so that only the outline is subsequently processed in the filter of this invention.

Another example is to remove all layout and formatting information from the data via a partial filter adapter. This means that only the filter subsequently processes the content itself. This may be useful, if the computer program that requested the data has no capability to use the layout and formatting information.

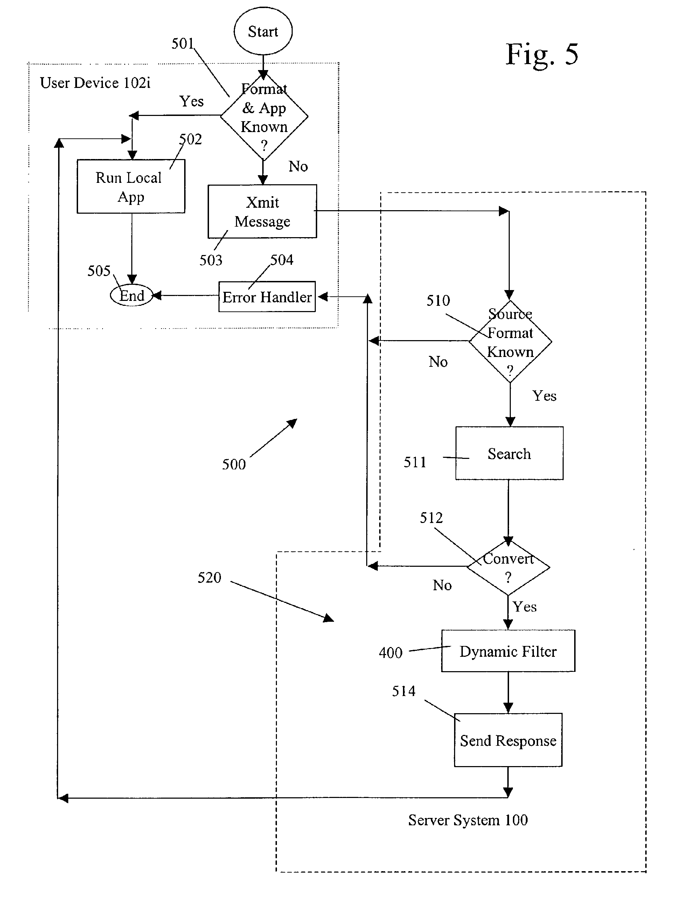

Process 500 (Fig. 5) is one embodiment of a use of method 400. Typically, in source format known check operation 501, a user application or a browser, executing on a user device 102i, where user device 102i can be any one device in the plurality of user devices 102A to 102F, determines whether the format for the user requested data (the source format) is known and whether a local application is available, which can read data with the source format. This can be done by searching a registration database, or simply by trying all available applications. If the source format is known and a local application is available, which can read data with the source format, processing transfers to run local application operation 502 on user device 102i, and otherwise to transfer message operation 503.

In run local application operation 502, the local application reads the data in the source format and displays the data on user device 102i. Upon displaying the data, method 500 is complete and so processing transfers to end 505. When it is said that a user device, or in fact any computer system, knows something or takes some action, those of skill in the art will understand that this means that an instruction or instructions are executed on the device to determine what is known or to cause the stated actions to be performed.

In transmit message operation 503, user device 102i sends the request for the data to server system 100. The information included in the request depends on the results of check operation 501. The request includes an identifier of the requested data, a source format field and a target format field. If the source format is completely unknown, the source format field is set to an illegal value, and a list of identifiers of data formats supported by user device 102i is placed in the target format field. Alternatively, an identifier for user device 102i could be provided. If the source format is known, but no appropriate application was found on device 102i, a source format identifier is written in the source format field. The target format field is completed as just described. The message is transmitted to server system 100.

In this example, it was assumed that the user only wanted to view the data and so user device 102i only needed capability for opening the requested document. If for example, the user was requesting the data with one application, e.g., a browser or viewer, but wanted to edit the document using another application after the document was received, the above decision process would be more complex. The application would require logic to make the necessary determinations. For example, the decision could be made to use a remote application to process the data after the data format conversion, and so a lightweight component would need to be downloaded and the desired format would depend on the capabilities of the remote application. See for example, commonly filed and commonly assigned EP Patent Application, entitled " METHOD AND SYSTEM FOR REMOTE CONTROL AND INTERACTION WITH A RUN TIME ENVIRONMENT COMPONENT," of Ralf Hofmann and Torsten Schulz (Attorney Docket No. 85881), which is incorporated herein by reference in its entirety. Independent of the decision process used on the client side to determine the target format, the message sent by client device 102i specifies at least an identifier of the requested data, and an indication of a target format.

Upon receipt of the message from client device 102i, source format known check operation 510 determines either whether the source format field in the message includes a legal value or whether the format of the source file can be detected. If either the source format field includes a legal value or the format of the source file can be detected, the source format is known and so processing transfers to convert check operation 512. Alternatively, the source format is unknown, and check operation 510 transfers to error handler operation 504 that terminates method 500.

In process 500, the operations performed on server system 100 could be performed by different modules executing on server system 100 in a first embodiment, and by a single module in a second embodiment. The particular module or modules that perform the operations of process 500 on server system 100 is not essential to this invention.

In search operation 511, if a user device identifier was provided, operation 511 first obtains information about user device 102i and available software on user device 102i. For example, operation 511 retrieves information about supported data formats from a database, or from other stored information about the type or nature of the software program and user device 102i. For example, if it is known that a text processing software program supports a certain data format, it may be sufficient to obtain the name of the text processing software program from user device 102i to obtain indirectly the required information about the certain data format supported by the text processing software program from a data source accessible to search operation 511 that is executing on server system 100.

When search operation 511 has a set of possible target formats, operation 511 finds a best combination of partial filter adapters to convert the data in the source format into data in the target format. If no conversion is possible, the set of partial filter adapters found is an empty set.

Thus, on entry to convert check operation 512, the data format of the requested data is known; the data format processing capabilities of user device 102i are known; and a set of partial filter adapters for converting the data is known. If convert check operation 512 determines that the set of partial filter adapters is not empty, check operation 512 transfers processing to dynamic filter method 400 and otherwise to error handler operation 504. Error handler operation 504 terminates processing because a set of partial filter adapters for use in transforming the source data to one of the target format supported by user device 102i was not found.

In dynamic filter method 400, a filter is constructed using the set of partial filter adapters, as described above. The filter is used to transform the data from the source format to the target format. Send operation 514 forwards the requested and transformed data, in this embodiment, to run local application operation 502 that performs as described above.

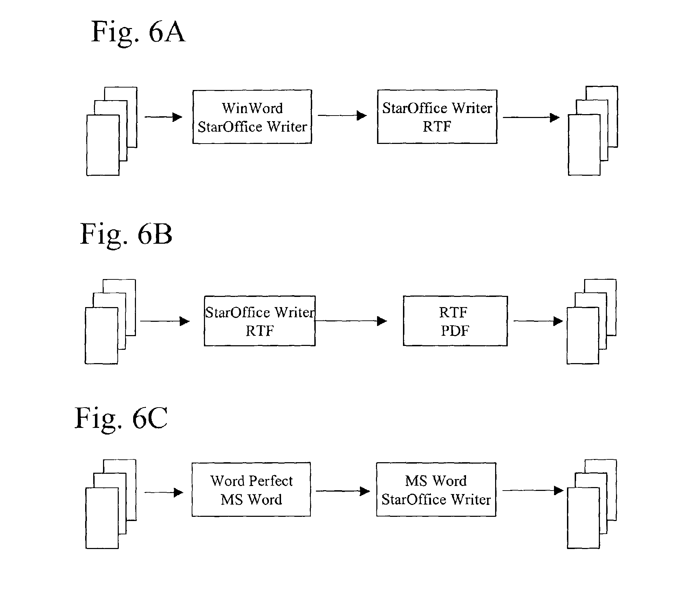

In Figures 6A to 6C, examples for converting documents from one source data format into another target data format are shown. In Figure 6A, method 400 starts with a document in the Microsoft WinWord format (the WinWord format) that was requested for use in an application that uses the RTF format. In this example, method 400 generates a filter employing one partial filter adapter for converting the document in the WinWord format into data having the STAROFFICE-Writer format and another partial filter adapter for converting the data in the STAROFFICE-Writer format into a document having the RTF format.

In the example in Figure 6B, a source document in the STAROFFICE-Writer format is converted into a PDF (Portable Document Format) document. Hence, filter method 400 starts with a document in the StarOffice-Writer format that was requested for use in an application that uses the PDF format, e.g., the user only wants to view the document. A first partial filter adapter converts the STAROFFICE-Writer format into a RTF format. A second partial filter adapter converts the RTF format into the PDF format.

In Figure 6C, the first data format is WordPerfect 2001 and the second data format is STAROFFICE Writer. The first partial filter adapter converts the data from WordPerfect 2001 format to MS Word 2000 format, while the second partial filter adapter converts the MS Word 2000 format to STAROFFICE Writer format.

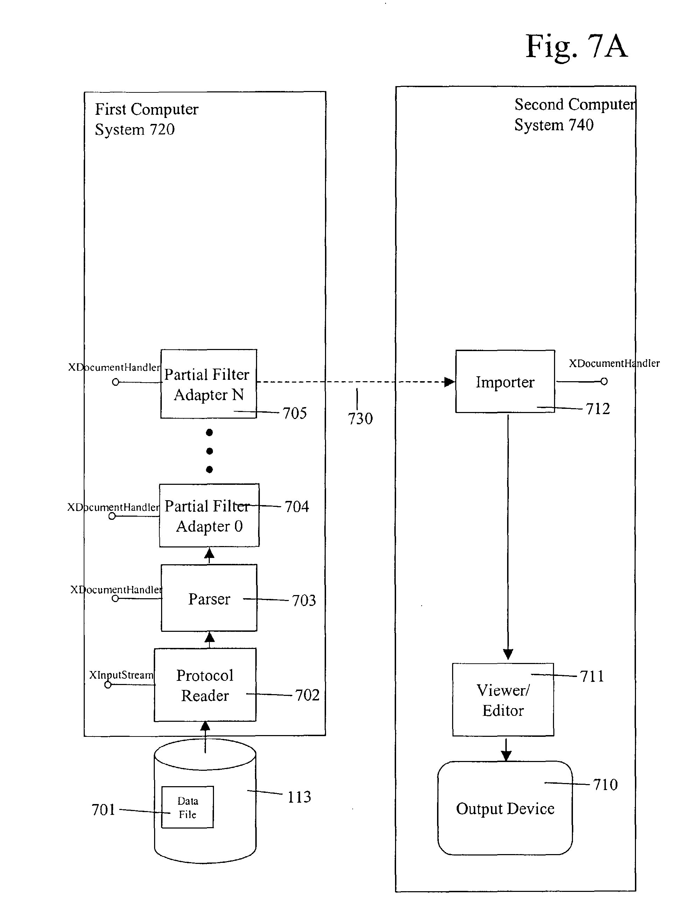

Figures 7A to 7D are examples of the use of different filters that can be built using filter server 120 of this invention. In Figure 7A, the structure of a data file 701 on a storage medium 113 accessible by a first computer system 720 is modified and provided to an output device 710, e.g., a speaker, a display, or a printer on a second computer system 740.

If storage medium 113 is not included within first computer system 720, data file 701 is accessible on demand via a network connection, for example, using special protocols like HTTP or FTP. Note that the request for data file 701 could have originated on computer system 720, computer system 740, or another computer system that is not shown. If the request originated from a computer system other than the computer system that ultimately processes the target data, e.g., system 740, the request included routing information so that data can be routed to the appropriate location.

To access data file 701 for further handling and processing, data file 701 is transferred from storage medium 113 to first computer system 720. In this embodiment, protocol reader 702 reads source data from an external representation of the data, here data file 701 on storage medium 113, into first computer system 720. Specialized protocol readers for different protocols exist, for example, protocol readers for protocols FILE, HTTP and FTP, respectively.

Protocol reader 702 has an interface, which allows reading the original source data. This interface provides access to the requested data file that means to the original source data. An example of this interface is interface *XInputStream* (See Table 1). Interface *XInputStream* is an interface for sequentially reading data from a data source. Such an interface has at least a method to read data, for example, method readBytes in interface *XInputStream* (See Table 1.).

Parser 703 parses the original source data stream of original data file 701 via the interface provided by protocol reader 702. For example, in one embodiment, parser 703 is an XML parser, which disassembles the original source data stream into XML tokens and contents.

Parser 703 uses a data sink interface, here for example SAX interface *XDocumentHandler* (Table 8), to forward the parsed data to a first partial filter adapter component 704. This data sink interface is generic and does not depend on the concrete document type of the original source data. In this embodiment, each partial filter adapter, in turn, uses the same generic interface *XDocumentHandler* to pass the data stream to the next partial filter adapter. In this embodiment, XML data is used to implement the generic format independent interface between the partial filter adapters. Specifically, each partial filter adapter component forwards the (partially) converted data to the next partial filter adapter component in the chain by using interface *XDocumentHandler.* The interfaces between the partial filter adapter components in this chain are the same and independent from the concrete document type.

The use of interface *XDocumentHandler* in the partial filter adapters is illustrative only and is not intended to limit the invention to this specific interface. Other similar interfaces may be used. Each partial filter adapter can be, for example, hard coded, or can be implemented by XSLT transformations, using an XSL processor and XSL transformation descriptions.

Each of these partial filter adapter components can either convert one format to another format without changing the information itself, or can add or reduce the information contained in the data, for example, by using third data sources like databases or reduction rules.

In the embodiment of Figure 7A, the last partial filter adapter 705 is adapted to issue a remote call over a network connection 730 to interface *XDocumentHandler* of an importer 712 for a target component 711. This effectively forwards the converted data directly to output device 710.

Importer 712 of target component 711 receives the target data by interface *XDocumentHandler* and builds an internal representation of the target data, for example a target document. Importer 712 may be part of target component 711. In the present examples, importer 712 is separated to give a clearer picture of the process.

Importer 712 calls native functions of target component 711 to build the internal presentation of the target data within target component 711. Interfaces belonging to target component 711 are used in building the internal presentation. Each target component 711 has interfaces that are known to those of skill in the art, and so are not considered further herein.

Target component 711, which is used to process the target data, can be, for example, a viewer, an editor or any other component, which processes data. Target component 711 has its own set of interfaces or other methods of receiving the target data.

Optionally, target component 711 may use a display component to present the document in a rendered (or any other) form to the user of second computer system 740. However, output device 710 can be any output device of second computer system 740 including, for example, the display or the loudspeaker of a computer or mobile phone.

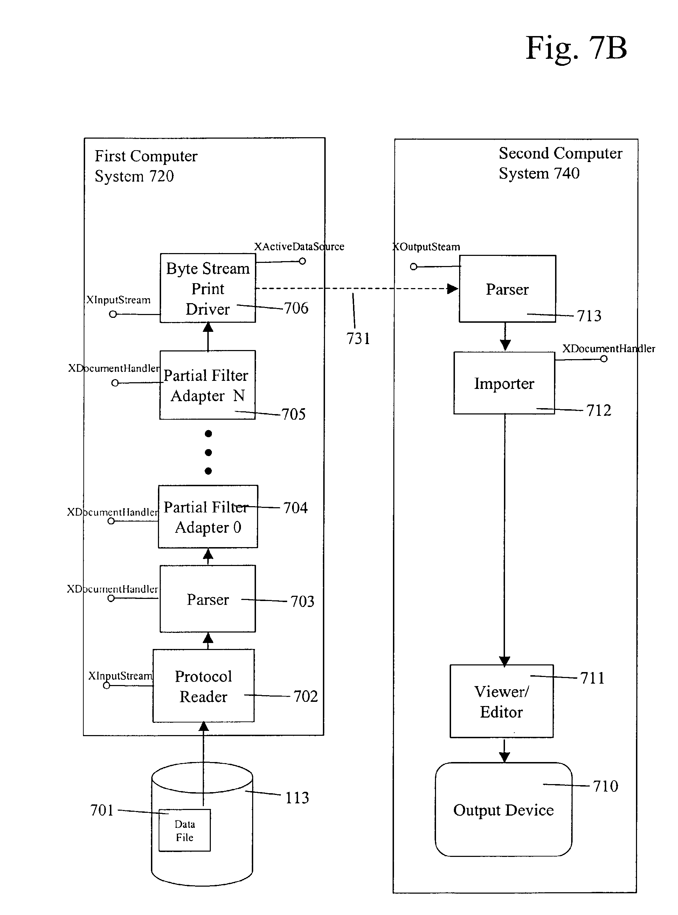

Elements 702 to 704 in Figure 7B are identical to those described above for Figure 7A and so that description is incorporated herein by reference. However, in the embodiment of Figure 7B, partial filter adapter 705 is not configured to communicate via a connection to computer system 740. Partial filter adapter 705 provides the converted data to a byte stream printer 706 via interface *XInputStream* in this example.

At this point, the original source data from data file 701 has been converted from the first data format, i.e., the original source data format, into an event-based target data format. From this event-based target data format, byte stream printer 706 converts the internal representation of the converted data into a representation in the second data format, which can be transferred to second computer system 740 as a binary stream. Byte stream printer 706 has a document type independent output interface, which in this embodiment is interface *XActiveDataSource.*

Byte stream printer 706 issues a remote call over a network connection 731 to interface *XOutputStream* of a parser 713 in second computer system 740. This is yet another example for the transfer of the converted data to the target system. In this case, simple data blocks can be transmitted over network connection 731. However, direct (unbuffered) polling data from remote computer systems may not be extremely efficient.

Parser 713 reads the data of the target file from byte stream printer 706 using interface *XOutputStream*. Parser 713 parses the target data stream of the target file from printer driver 706 and provides data to interface *XDocumentHandler* of importer 712.
Elements 712 to 710 in Figure 7B are identical to those described above for Figure 7A and so that description is incorporated herein by reference.

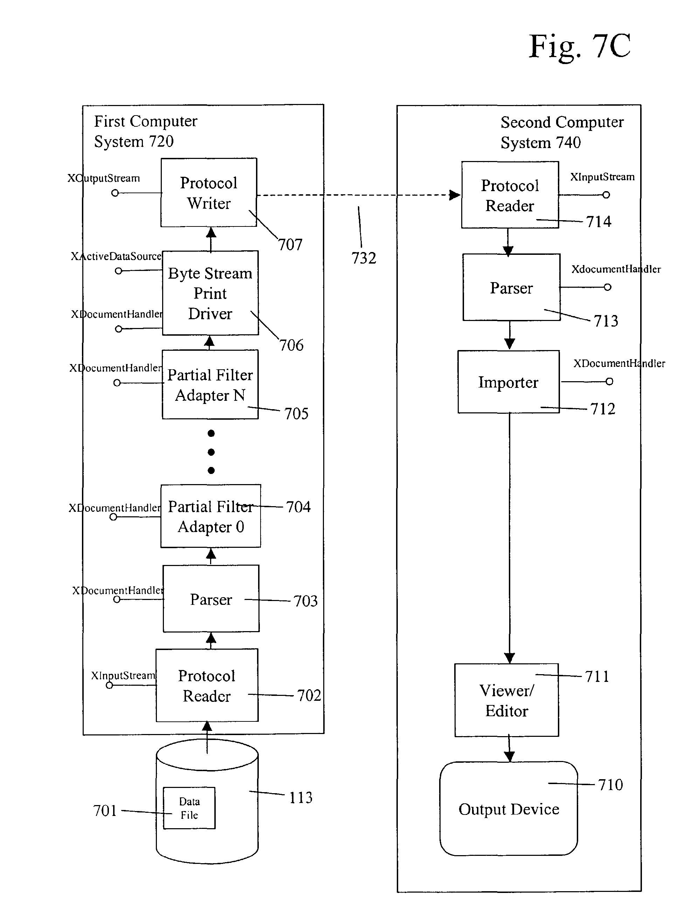

Elements 702 to 705 in Figure 7C are similar to those described above for Figure 7B and so that description is incorporated herein by reference. However, in the embodiment of Figure 7C, byte stream print 706 receives converted data from the prior partial filter adapter by the same document type independent interface, that means interface *XDocumentHandler* or a similar interface.

Byte stream printer 706 uses, for example, interface *XActiveDataSource* to write the data in the target data format to protocol writer 707. Interface *XActiveDataSource* is an interface for sequentially writing data to a target component by registering an interface *XOutputStream* to receive the data.

Protocol writer 707 creates a data file from the target data obtained from bit steam printer 706. Depending on the protocol used to create the target data file, a different protocol writer component is used. In this embodiment, a specialized protocol writer 707 is used on first computer system 720. Protocol writer 707 directly communicates using any network protocol with a specialized protocol reader 714 on second computer system 740 via network connection 732.

Protocol reader 714 on second computer system 740 reads the target data file into the software system. Specialized readers for different protocols may exist, i.e. for FILE, HTTP or FTP. Protocol reader 714 uses interface *XInputStream* to provide the target data to parser 713. Elements 713 to 710 function as described above, and that description is incorporated herein by reference.

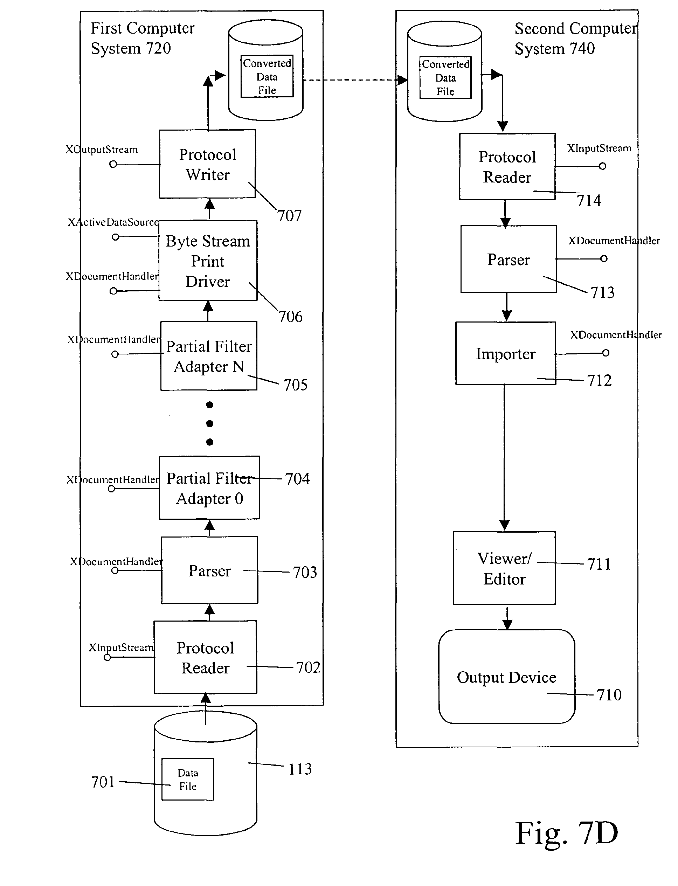

Figure 7D illustrates an embodiment of the invention that is similar to the embodiment of Figure 7C. The difference is that in the embodiment of Figure 7D, protocol writer 707 and protocol reader 714 do not communicate directly. In this example, a file system writer is created which in turn creates the target file with the target data in the file system of first computer system 720.

The target data file, which is locally stored in first computer system 720, is transferred (copied) to the file system on second computer system 740. Parser 713 reads the data of the target file from the protocol reader 714 using the interface *XInputSkream*. Preexistent software can be used on second computer system 740, if target element 711 actually contains all of elements 712 to 714. Alternatively, to the depicted usage in two computer systems 720 and 740, this invention can be used on a single computer system too, as shown in Figure 4.

Table 1 is one embodiment of interface *XInputStream* that was used in the protocol readers described above. Interface *XInputStream* is a basic interface to read data from a stream. Interface *XInputStream* inherits from interface *XInterface* that is presented in Table 2. In this embodiment, interface *XInputStream* includes methods readBytes, readSomeBytes, skipBytes, available, and closeInput. As shown in Table 1, each method can raise one of a plurality of exceptions including NotConnectedException (Table 6), BufferSizeExceededException (Table 7), and IOException (Table 4).

Method readBytes reads the specified number of bytes in the given sequence. The return value specifies the number of bytes, which have been put into the sequence. A difference between input parameter nBytesToRead and the return value indicates that an EOF has been reached. This method blocks the thread until the specified number of bytes are available or the EOF is reached. Some implementations must buffer their data to fulfill their specification, and if so exception BufferSizeExceededException may be thrown. When the object is not connected to another interface *XInputStream* (the need for a connection must be specified by the service specification) exception NotConnectedException is thrown. Exception IOException is thrown when a general IO error occurs.

Method readSomeBytes reads the available number of bytes and at maximum the number of bytes specified by input parameter nMaxBytesToRead. This method blocks the thread until at least one byte is available. This method returns the number of bytes actually read. If zero is returned, EOF has been reached. The exceptions thrown by this method were described above.

Method skipBytes skips the next nBytesToSkip bytes (must be positive). It is up to the implementation whether this method is blocking the thread or not.

Method available states how many bytes can be read or skipped without blocking. This method offers no information on whether the EOF has been reached.

Method closeInput closes the stream. Users must close the stream explicitly when no further reading should be done. (There may exist ring references to chained objects that can only be released during this call. Thus, not calling this method would result in leak of memory or external resources.

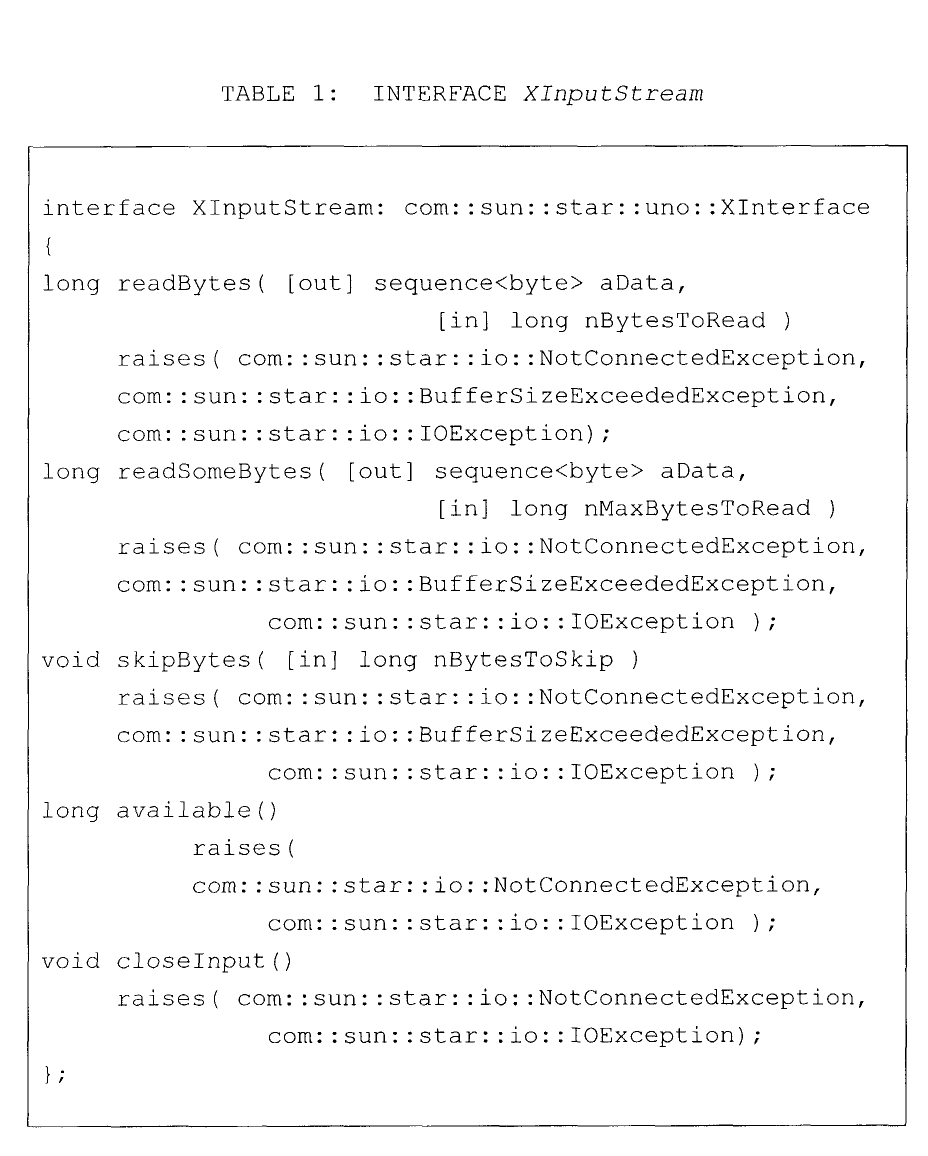

Interface *XInterface* (Table 2) is the base interface for other interfaces and provides lifetime control by reference counting. Interface *XInterface* also provides the possibility of querying for other interfaces of the same logical object. Logical object in this case means that the interfaces actually can be supported by internal, i.e., aggregated, physical objects.

Method *queryInterface in* interface *XInterface* queries for a new interface to an existing object. Method *acquire* increases a reference counter by one, while method *release* decreases the reference counter by one. When the reference counter reaches a value of zero, the object is deleted.

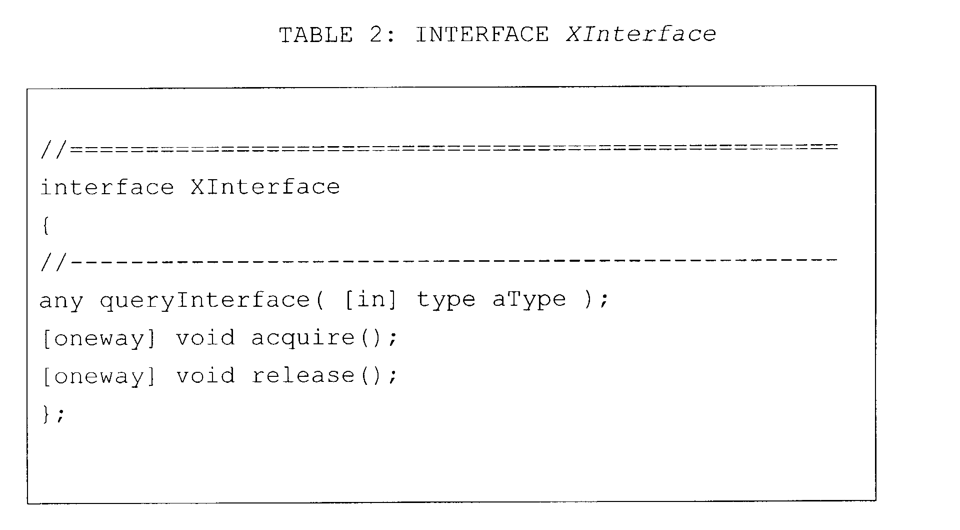

One embodiment of structure Uik is presented in Table 3.

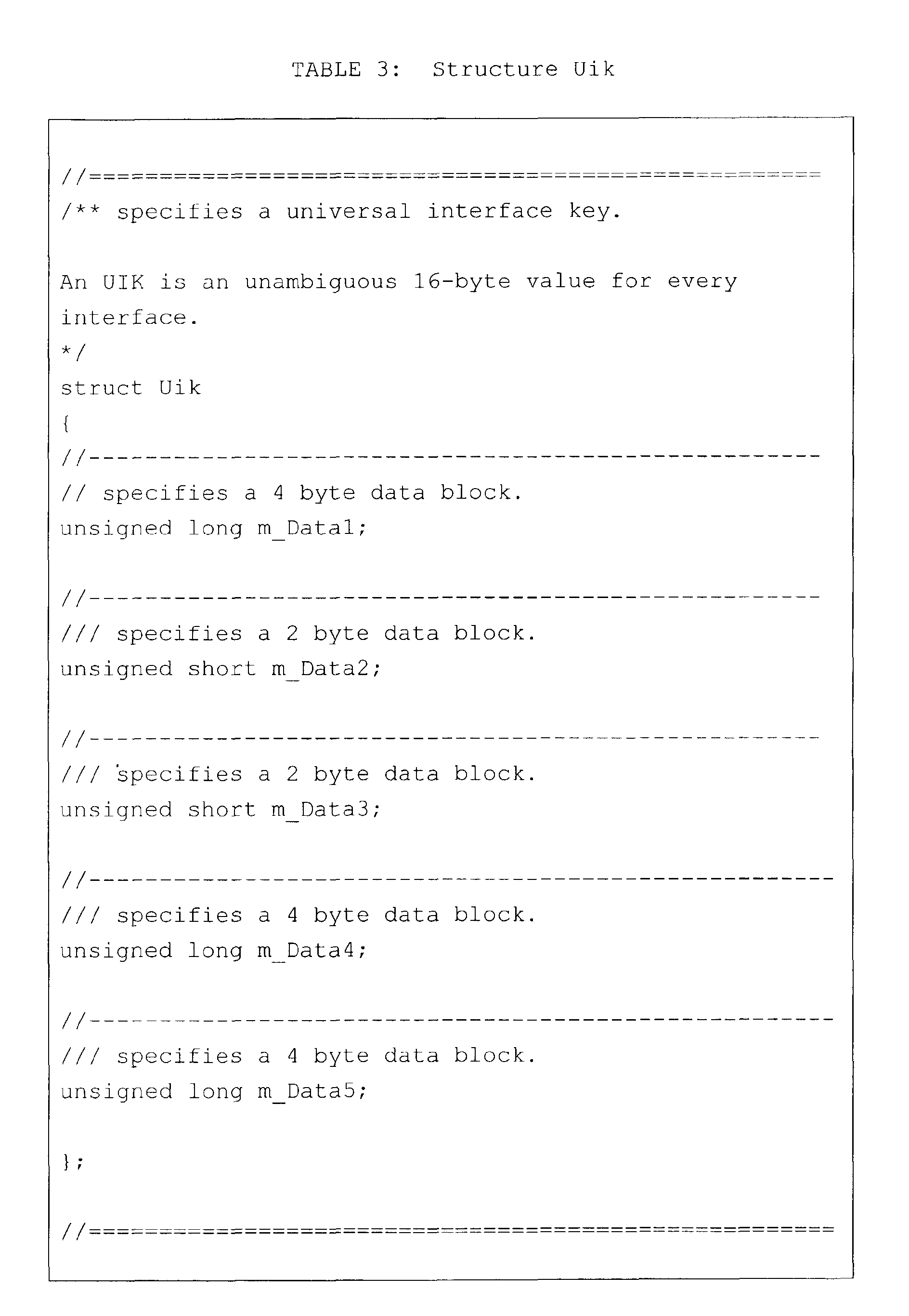

Exception IOException (Table 4) in interfaces XInputStream (Table 1), and *XOutputStream* (Table 12) inherits from exception Exception (Table 5). Exception IOException is thrown when an input or output error has occurred.

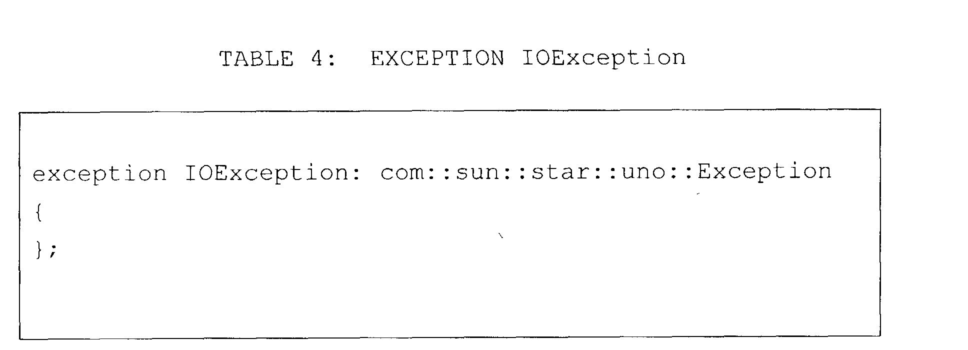

Exception *Exception* is the basic exception. All exceptions are derived from this exception. Message specifies a detailed message of the exception or an empty string if the callee does not describe the exception. Context is an object that describes the reason for the exception. Context may be NULL if the callee does not describe the exception.

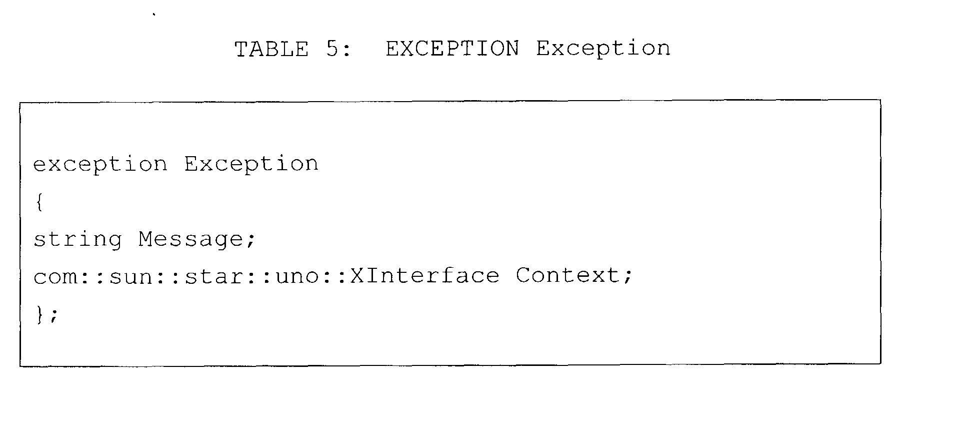

Exception NotConnectedException (Table 6) in interfaces *XInputStream* (Table 1), and *XOutputStream* (Table 12) inherits from exception IOException (Table 4). Exception NotConnectedException is thrown when a read/write operation is tried on an instance that has not been chained properly.

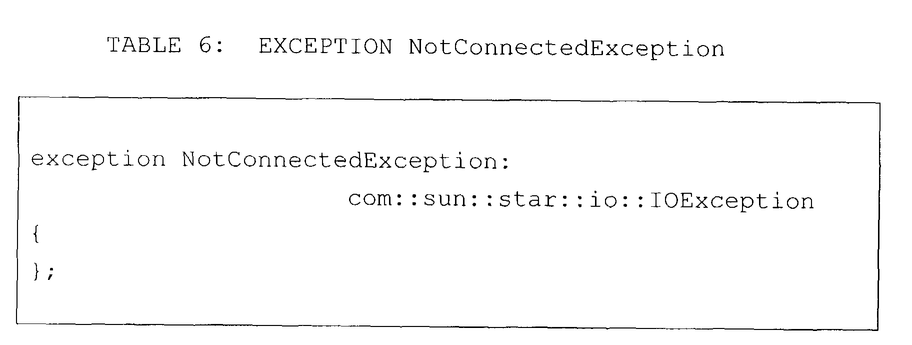

Exception BufferSizeExceededException (Table 7) in interfaces *XInputStream* (Table 1), and *XOutputStream* (Table 12) inherits from exception IOException (Table 4). Exception BufferSizeExceededException is thrown by instances, which need to buffer data. This exception indicates that not enough system resources are available for extending the buffer. This exception May also indicate that the internal buffer has grown to a larger size than 2 GBytes. Some current implementations do not support larger buffers.

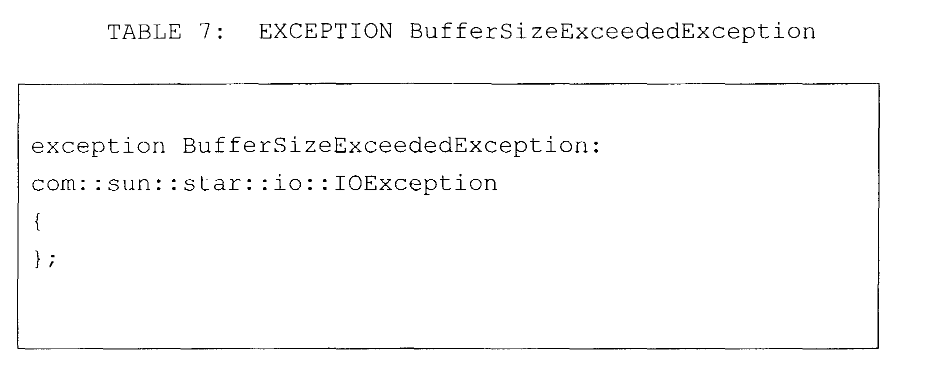

Interface *XDocumentHandler* (Table 8) also inherits from interface *XInterface* (Table 2). Interface *XDocumentHandler* receives notification of general document events. In this embodiment, interface *XDocumentHandler* includes methods startDocument, endDocument, startElement, endElement, characters, ignorableWhitespace, processingInstruction, and setDocumentLocator. Each of these methods can raise an exception SAXException. One embodiment of exception SAXException is presented in Table 9.

Method startDocument receives notification of the beginning of a document. Method endDocument receives notification of the end of a document.

Method startElement receives notification of the beginning of an element. Input parameter aName contains the name of the tag. Input parameter xAttribs contains an interface to the list of attributes given in the tag. Note that for every call of the method, the same instance may be passed. So one must make copy of the instance to store the information.

Method endElement receives notification of the end of an element. Method characters receives notification of character data. Method ignorableWhitespace receives notification of white space that can be ignored.
Method processingInstruction receives notification of a processing instruction. Method setDocumentLocator receives an object for locating the origin of SAX document events.

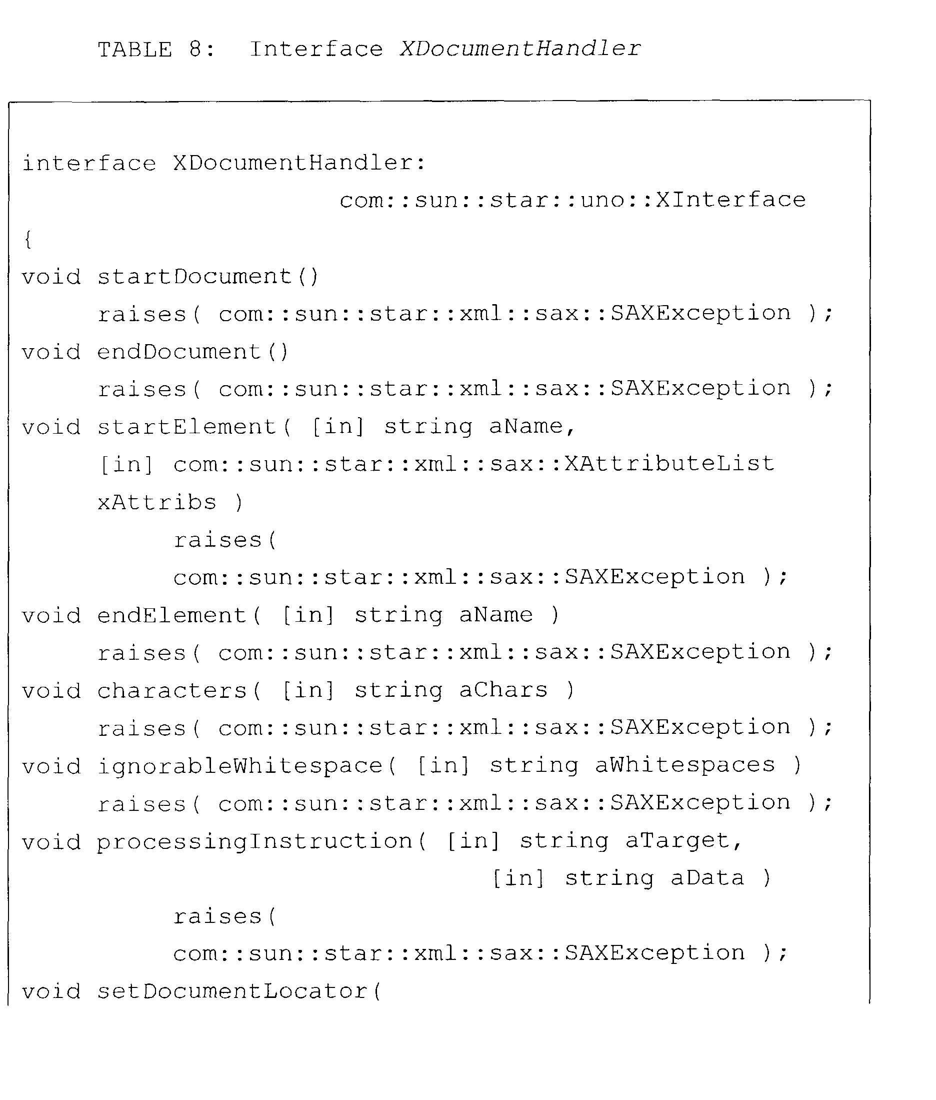

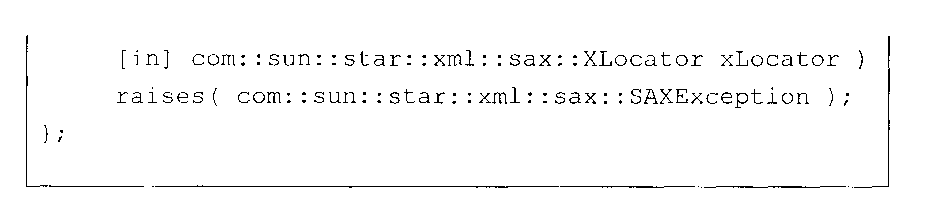

Exception SAXException also inherits from exception Exception (Table 5). Exception SAXException encapsulates the details of an XML parse error or warning.

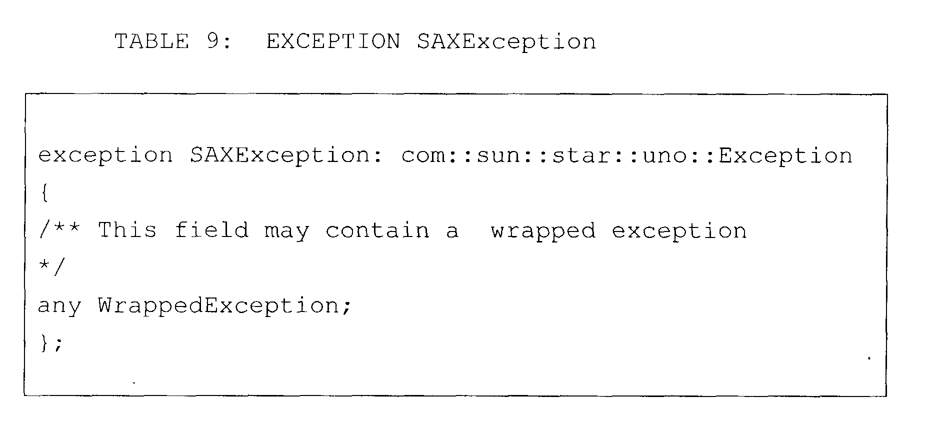

Interface *XAttributeList* is used in method startElement of interface *XDocumentHandler* (Table 8). Interface *XAttributeList* inherits from interface *XInterface* (Table 2). Interface *XAttributeList* specifies an element's attributes. This interface describes a name-type-value triple, which describe a single attribute of a tag.

Method getLength returns the number of attributes in this list. Method getNameByIndex returns the name of an attribute in this list by position. Method getTypeByIndex returns the type of an attribute in the list by position. Non-validating parsers may return CDATA only. Method getTypeByName returns the type of an attribute in the list by name. Non-validating parsers may return CDATA only. Method getValueByIndex returns the value of an attribute in the list by position. Method getValueByName returns the value of an attribute in the list by name.

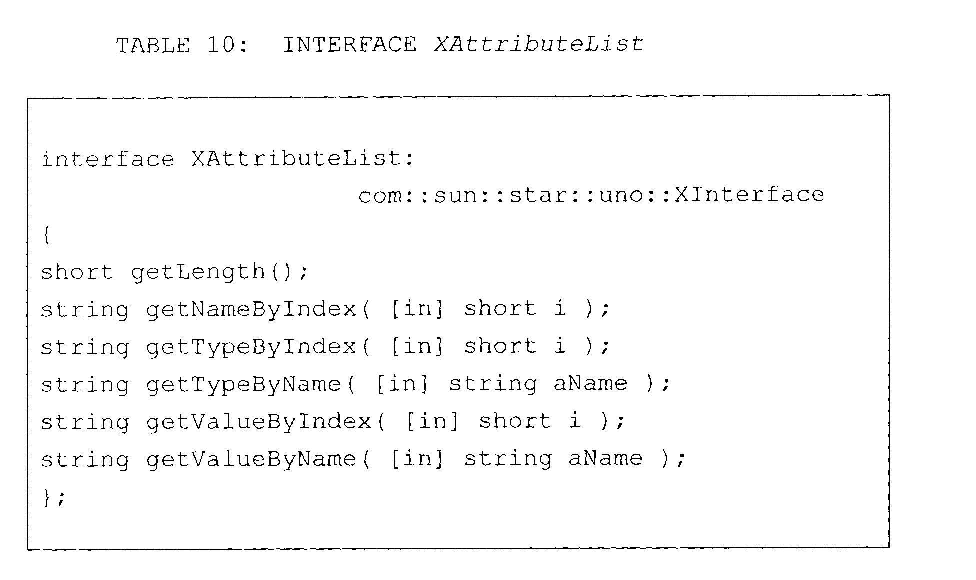

Interface *XLocator* is used in method setDocumentLocator of interface *XDocumentHandler* (Table 8). Interface *XLocator* inherits from interface *XInterface* (Table 2). Interface *XLocator* makes it possible to associate a SAX event with a document location.

Method getColumnNumber returns the column number where the current document event ends. Method getLineNumber returns the line number where the current document event ends. Method getPublicId returns the public identifier for the current document event. Method getSystem ID returns the system identifier for the current document event.

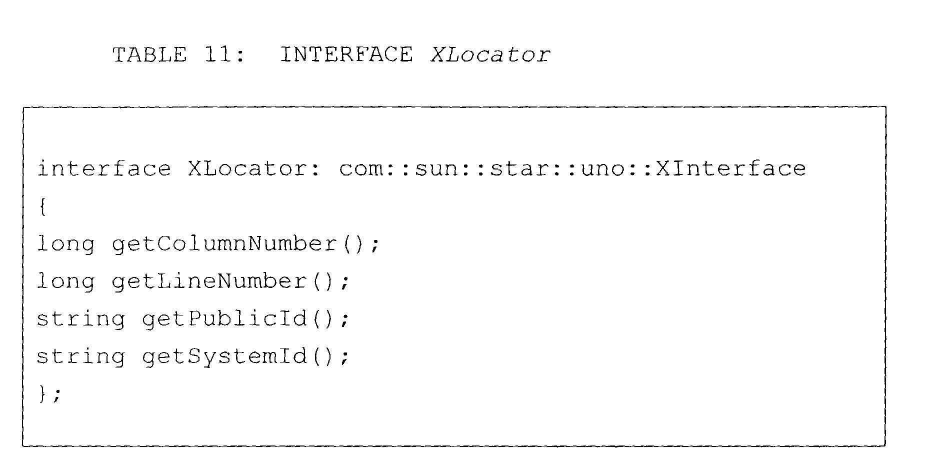

Interface *XOutputStream* inherits from interface *XInterface* that is presented in Table 2. Interface *XOutputStream* is the basic interface to write data to a stream. In this embodiment, interface *XOutputStream* includes methods writeBytes, flush, and closeOutput that are each briefly described within Table 12. As shown in Table 12, each method can raise one of a plurality of exceptions including NotConnectedException (Table 6), BufferSizeExceededException (Table 7), and IOException (Table 4).

Method writeBytes writes the whole sequence to the stream. (Blocking call.) Method flush flushes any data that may exist in buffers out of the stream. Method closeOutput is called to indicate that all data has been written. If this method is not yet been called, no attached interface *XInputStream* receives an EOF signal. No further bytes may be written after this method has been called.

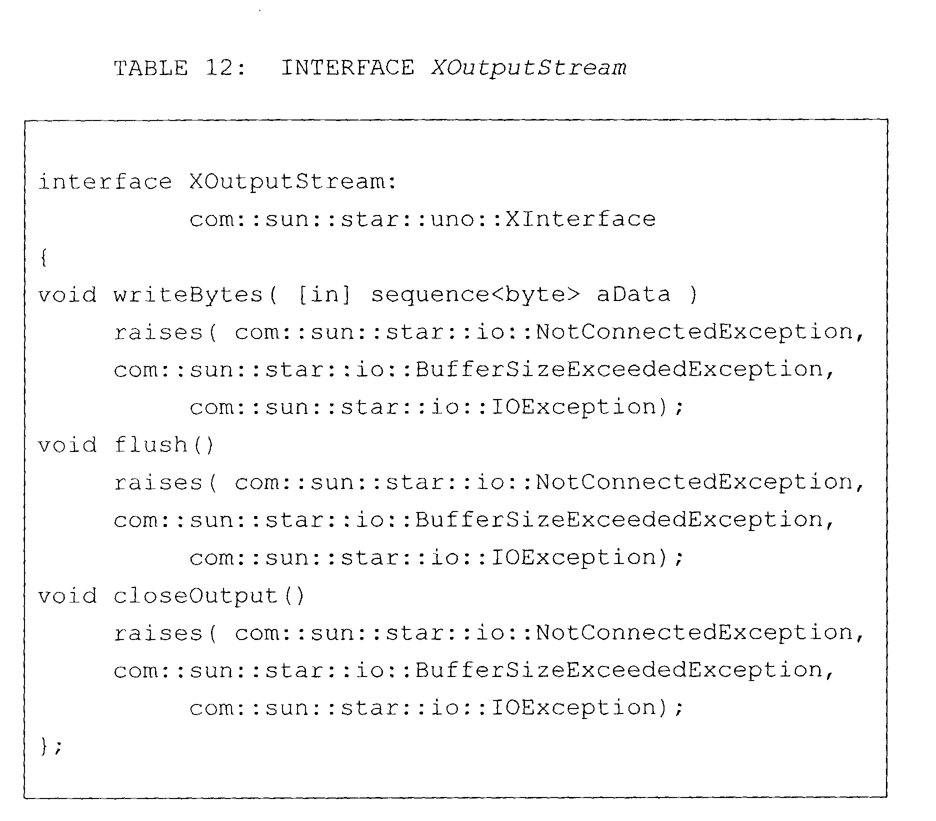

Interface *XActiveDataSource* (Table 13) inherits from interface *XInterface* that is presented in Table 2. In this embodiment, interface *XActiveDataSource* includes method setOutputStream and method getOutputStream. Method setOutputStream plugs the output stream, while method getOutputStream returns the plugged stream.

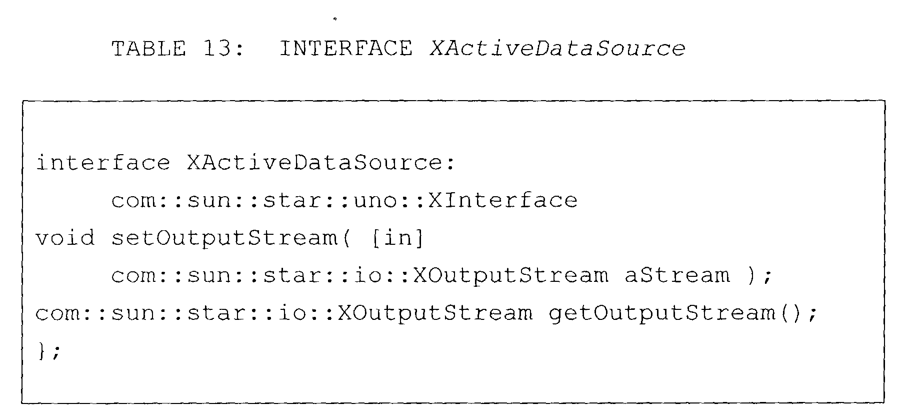

Herein, a computer program product comprises a medium configured to store or transport computer readable code for all or any part of filter server 120 and in particular in which computer readable code for conversion service 125 is stored. Some examples of computer program products are CD-ROM discs, ROM cards, floppy discs, magnetic tapes, computer hard drives, servers on a network and signals transmitted over a network representing computer readable program code.

As illustrated in Figure 1B, this storage medium may belong to computer system 102i itself. However, the storage medium also may be removed from computer system 102i. For example, conversion service 125 may be stored in memory 184 that is physically located in a location different from processor 101. The only requirement is that processor 101 is coupled to the memory. This could be accomplished in a client-server system, e.g. as in Figure lA, or alternatively via a connection to another computer via modems and analog lines, or digital interfaces and a digital carrier line.

Herein, a computer memory refers to a volatile memory, a non-volatile memory, or a combination of the two. Similarly, a computer input unit and a display unit refers to the features providing the required functionality to input the information described herein, and to display the information described herein, respectively, in any one of the aforementioned or equivalent devices.

In view of this disclosure, filter server 120 can be implemented in a wide variety of computer system configurations. In addition, filter server 120 could be stored as different modules in memories of different devices. For example, conversion service 125 could initially be stored in a server computer 100, and then as necessary, a module of conversion service 125 could be transferred to a client device 102i and executed on client device 102i. Consequently, part of conversion service 125 would be executed on the server processor, and another part would be executed on the processor of client device 102i. In view of this disclosure, those of skill in the art can implement the invention in a wide-variety of physical hardware configurations using an operating system and computer programming language of interest to the user.

Filter server 120 of the present invention may be implemented in a computer program including comprehensive office application STAROFFICE that is available from Sun Microsystems, Inc. of Palo Alto, CA. (STAROFFICE is a trademark of Sun Microsystems.) Such a computer program may be stored on any common data carrier like, for example, a floppy disc or a compact disc (CD), as well as on any common computer system's storage facilities like hard discs. Therefore, one embodiment of the present invention also relates to a data carrier for storing a computer program for carrying out the inventive method. Another embodiment of the present invention also relates to a method for using a computer system for carrying out the presented inventive method. In yet another embodiment of the present invention further a computer system includes a storage medium on which a computer program for carrying out the presented inventive method is stored.

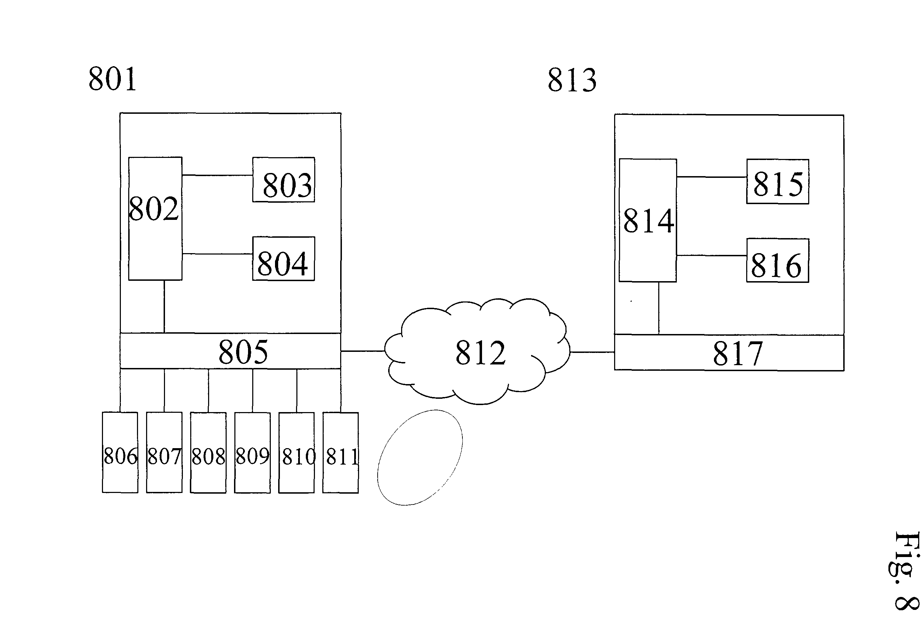

In the following, further embodiments of the invention will be described with respect to Figs. 8 - 16.

First, an embodiment of the invention will be described with respect to Fig. 8. Fig. 8 shows an example for a second computer system 801 suitable to be used in the scope of the present invention. This second computer system 801 comprises a processor 802, memories 803, 804 and an i/o interface 805. The memory of the second computer system 801 is divided in this example into a volatile memory 803, like a working memory, and a non-volatile memory 804, like a hard disk. Via the i/o interface 805 the second computer system 801 may, for example, be connected with input/output devices 806 to 811. Common input/output devices are a keyboard 806, a monitor 807 and a printer 808. Other input devices like a mouse 809, a scanner 810 and a CD-ROM 811 are also possible. Frequently, the second computer system 801 is also connected to a network 812 via this i/o interface 805. A first computer system 813 may be connected to the second computer system 801 via this network 812. This first computer system 813 may comprise as well a processor 814, memories 815, 816 and an i/o interface 817.

It is desirable to provide access to data having a certain data format regardless of this data format from a computer system which is initially not able to handle and process this data format. The method according to the present invention may be employed, for example, for enabling a user to access his data by means of different computer systems. A user may store, for example, an address-list as a part of a schedule program via his second computer system 801, in this example a standard personal computer in his office, on a first computer system 813, in this example a central server. The corresponding data may be stored in a first data format which is specific for the employed schedule program.

In the following example, the user wants to access this address list via another second computer system 801, for example a standard personal computer in the office of a customer. It is understood that the method according to the present invention is not limited to standard personal computers. Any other computer systems like, for example, laptops, handheld computers and mobile phones can also be employed as second computer systems 801. In the case that the actually used second computer system 801 may not comprise the specific schedule program, prior art systems would have difficulty in providing the user access to the address-list. However, if the method according to the present invention is applied the user will get easy access to the address-list, although the actually used second computer system 801 does not have the specific schedule program normally required to access the address list.

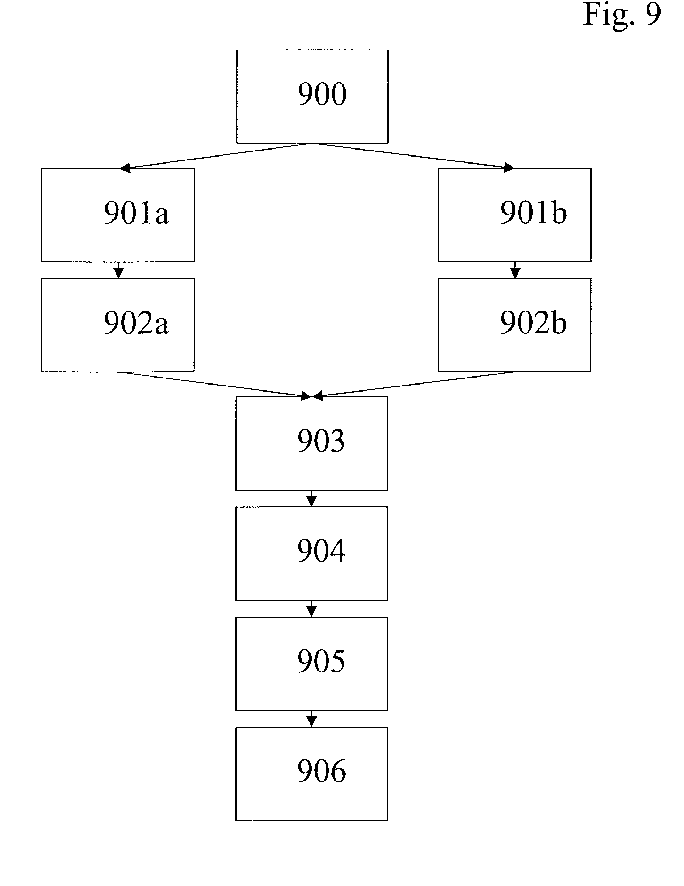

The flow chart in Fig. 9 represents the steps of the present example. In a first step 900 the user may contact the first computer system 813 in order to open the specific address list. The first computer system 813 and the second computer system 801 will start a communication in order to select a data format for the requested data. This may take place, for example, by two different ways:

If the second computer system 801 knows that the requested data is formatted in a certain first data format the method will carry out the step 901a in Fig. 9. In this step the second computer system 801 will inspect the software programs which are available to the second computer system 801 in order to find software programs which support the first data format of the requested data or a compatible data format. Thereafter, the second computer system 801 will inform the first computer system 813 whether the second computer system 801 is able to open the requested data in the first data format, or if the first computer system 813 may have to convert the data from the first data format into a second data format supported by the second computer system 801. If the second computer system 801 has no access to a software program which supports the first data format of the requested data, the second computer system 801 will inform in step 902a the first computer system 813 about one or more second data formats supported by it. Based on this additional information the first computer system 813 may provide the requested data directly to the second computer system 801 - if the second computer system 801 supports the first data format - or the first computer system 813 may first convert the requested data in a second data format - if the second computer system 801 does not support the first data format -, as will be described below.

If the second computer system 801 does not know the first data format of the requested data, the first computer system 813 has to decide whether the requested data may have to be converted or not. In order to find out which data formats are supported by the second computer system 801 the first computer system 813 may start a function for searching the software programs available to the second computer system 801, represented by step 901b in Fig. 9. The result of this search function may be the information about software programs available to the second computer system 801 or the supported data formats, respectively. The result of this search function may be evaluated in step 902b in the first computer system 813 and based on this result the first computer system 813 may convert the requested data in the second data format.

In order to convert the requested data in the second data format the first computer system 813 will generate dynamically an adapter for converting data from the first data format into the second data format. According to the present invention such a converting step is carried out by employing an intermediate data format, especially an XML format.

The first computer system 813 may have access to a data base with adapters between the first and the second data format, respectively, and the standard data format, in this example a XML format. Such adapters allow to convert data from the first or second data format, respectively, into a XML format and also to convert data from a XML format into the first and second data format, respectively.

After the first computer system 813 has specified in step 902a or in step 902b the second data format the first computer system 813 may select in step 903 from the data base a first adapter which enables to convert data from the first data format into a XML format and a second adapter which enables to convert data from a XML format into the second data format. These two adapters may be combined in step 904 in a way that the data may be converted from the first data format into the second data format, without the existence of the data in the intermediate data format, a XML format in this example.

These adapters may be employed for the converting in step 905 of the requested data into the second data format. Thereafter, the converted data may be transmitted in step 906 to the second computer system 801 in order to open this data on the second computer system 801.

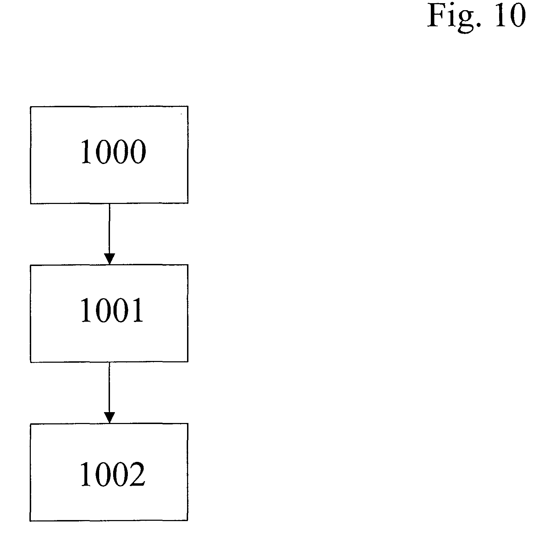

Fig. 10 shows in a flow chart the steps for generating an adapter for converting data being formated in a first data format into data being formated in a second data format.

In a first step 1000 a first partial adapter is selected from an adapter library. The first partial adapter is a software module which is able to convert data from a first data format into the intermediate data format and vice versa. The first partial adapter may be bidirectional for conversion in two directions or unidirectional for conversion only in one direction. The selection of the first partial adapter requires information as to the first data format of the data. Furthermore, information will be required about the intermediate data format, if the intermediate data format is not yet determined for the inventive method. This information may be received and the selection carried out by a suitable software program.

In a second step 1001 the second partial adapter is selected from the adapter library. The explanations given above for the selection of the first partial adapter apply here as well. The sequence of the selection of the first and the second partial adapter is not relevant to the present invention. It will be determined according to practical considerations.

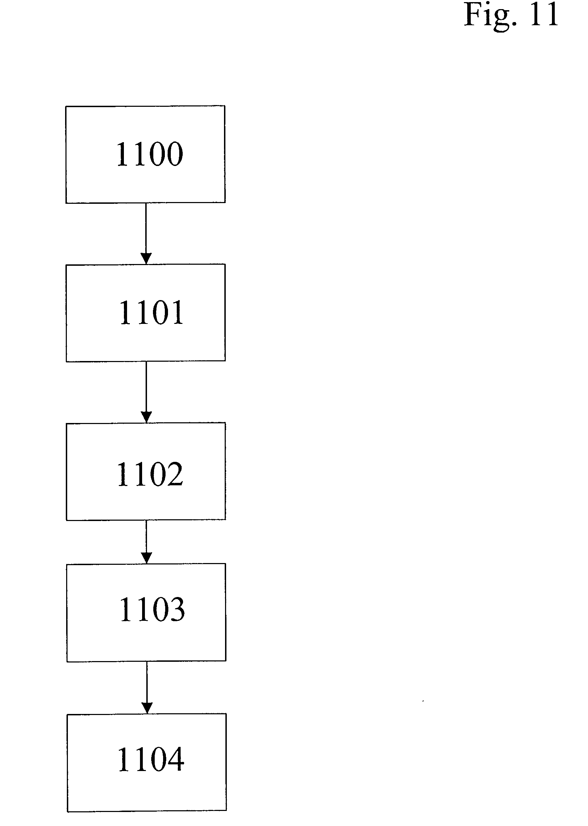

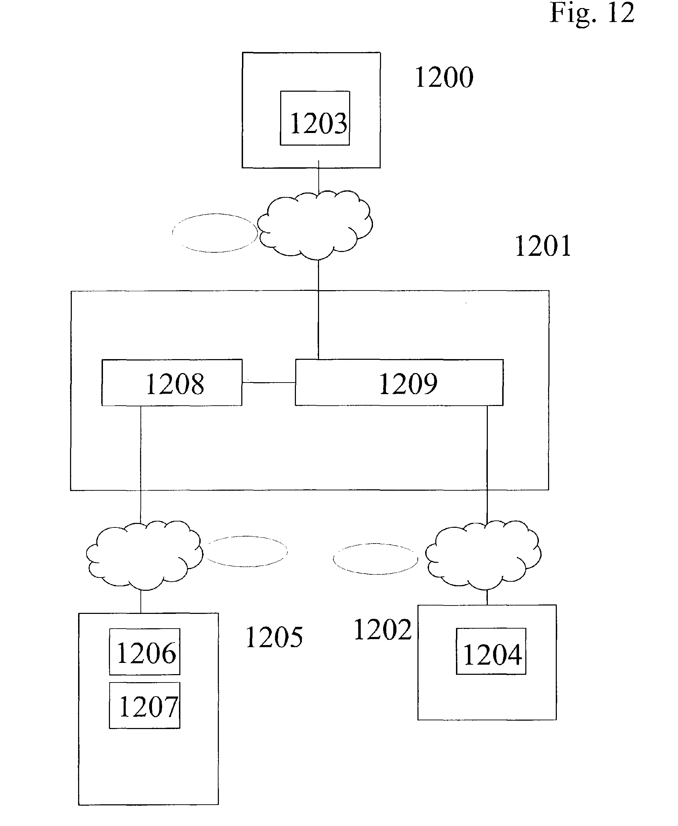

Finally, in a third step 1002 the first partial adapter and the second partial adapter are combined, so that the desired adapter for converting data from a first data format into a second data format is generated. This combination may be achieved by a software program which is informed about the selected adapters and their address in a storage or memory medium. For example, the above described software program which carries out the selection of the first and the second partial adapter may also carry out their combination. Fig. 12, which will be described below, shows a possible mechanism of these selection and combination steps. Fig. 11 exemplary shows in a flow chart the conversion of data from a first data format into a second data format, as it is carried out by the inventive method.

In a first step 1100 the data in the first data format which shall be converted is loaded onto the computer system on which the conversion will be carried out. Loading of the data means to make it available for further processing by the adapter which will also be available on the computer system which converts the data. The loading may require the transfer of the data from another computer system or storage medium, for example, a data base separated from the computer system on which the conversion will be carried out, because the data to be converted need not be stored on this computer system. This transfer may be carried out via any suitable data channel, be it permanent or temporary.

In step 1101 the data to be converted is read by the generated adapter as a whole or part by part. In step 1102 the information contained in the data which is not relevant for the representation of the data in the second data format may be stripped and disregarded in the further process of conversion. Such information may, for example, by layout commands which are meaningful in the first data format, but are meaningless in the second data format. In step 1103 the remaining content of the data, i.e. the non-stripped information, will be converted from the first data format into the second data format using the generated adapter. The adapter may be generated, as explained above, on the fly, that means it will be generated on demand and it need not be stored, unless a storage during the conversion of the data in the computer system is advantageous for some reason, for example, due to the size of the adapter in relation to the working memory of the computer system's processor.

Finally, in step 1104 the converted data is stored in a storage medium accessible to the computer system which carried out the conversion of the data. Herewith, the data is accessible to users in the second data format.

The generation of an adapter and the conversion of data with the generated adapter according to the present invention, as they were described in Fig. 10 and Fig. 11 above, may be carried out on a client-server system as it is shown in Fig. 12.

Fig. 12 shows a client 1200, for example, a laptop computer which has access, for example, via a real or virtual network, to a server 1201 which has in turn access to a storage medium 1202. A software program 1203 runs on the client 1200. This software program 1203 desires access to data 1204 which is stored on storage medium 1202. The software program 1203 supports a second data format, but not the first data format in which the data 1204 is stored on the storage medium 1202. Therefore, the software program 1203 is not able to directly access the data 1204 on the storage medium 1202.

In order to render the data 1204 accessible to the software program 1203 the server 1201 has access to an external data base 1205 containing a library of partial adapters 1206, 1207, ... . A software program 1208 on the server 1201 is able to generate the adapter required for converting the data 1204 from the first data format into the second data format. A further software program 1209 on the server 1201 serves for applying the generated adapter and thereby provides the converted data 1204, which may then be returned to the client 1200.

According to the present invention the software program 1203 on the client 1200 contacts the software program 1209 on the server 1201 in order to obtain access to the data 1204 stored on the storage medium 1202. The software program 1209 may ask the software program 1203 which has issued the request for access which data format it can or would like to support. It may further ask the storage medium 1202 in which data format the data 1204 is available. Having so determined the first data format - in which the data 1204 is stored on storage medium 1202 - and the second data format - which is supported or required by the software program 1203 - the software program 1209 may request from the software program 1208 an adapter allowing the conversion of data from the first data format to the second data format. The software program 1208 will, based on this information, contact the data base 1205 and select the first partial adapter 1206 - which is able to convert between the first data format and the intermediate data format - and a second partial adapter 1207 - which is able to convert between the intermediate data format and the second data format - and combine both in order to generate the desired adapter. This adapter will then be provided for application from the software program 1208 to the software program 1209, where the conversion of the data 1204 be effected. This conversion requires that the data 1204 is transferred from the storage medium 1202 to the software program 1209 on the server 1201. The converted data will then be sent to the software program 1203 on the client 1200.

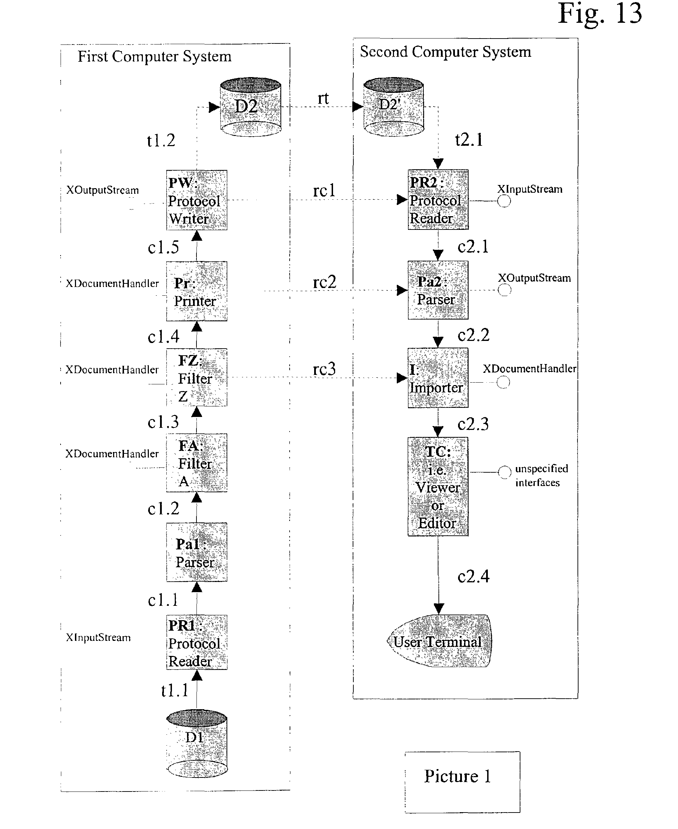

Examples for the implementation of the present invention are in the following described in more detail along Figures 13 to 15 and Table 1.

In Fig. 13 the data transfer and the data format filtering, that means the data conversion process employing a first and a second computer system is described.

Original source data is present in its source data format, above referred to as the first data format, on a first computer system. It shall be converted into a target data format, above referred to as the second data format, so that it is accessible by a second computer system which supports the second, but not the first data format. This conversion is effected via an intermediate data format. This process will be described in more detail in the following.

D1: storage medium for original source data
The original source data are the data stored on the first computer system and to be accessed by the second computer system. Here, this data is stored on a storage medium D1 of the first computer system in the form of a data file. Alternatively, the data could be procured on demand via a network connection, for example, using special protocols like HTTP or FTP. The data could also be stored on a third computer system which is accessible for the first or the second computer system.

t1.1: transfer of the original source data to the protocol reader PR1
In order to access the data file for further handling and processing the data file is transferred from the storage medium Dl of the first computer system to a protocol reader PR1, which may also be located on the first computer system.

PR1 : Protocol Reader 1
The protocol reader PR1 on the first computer system reads source data from an external representation of data, here the storage medium D1, into the first computer system. Specialized protocol readers for different protocols may exist, for example, for FILE, HTTP or FTP.

c1.1 : reading the original source data
An interface which allows reading the original source data is provided by the protocol reader PR1. This interface provides access to the requested data file, that means to the original source data. An example for such interface is XinputStream.

The XinputStream is an interface for sequentially reading data from a data source. Such an interface has at least a method to read data, for example, the following:
void XinputStream: readData( [in] sequence<byte> a Buffer )
throws IOException;

Pal (Parser 1): parsing the structure of the original source data
The parser Pal parses the original source data stream of the original data file. For example, this can be an XML parser, which disassembles the original source data stream into XML tokens and contents. The XInputStream offered by PR1 and mentioned in c1.1 is used to access the original source data.

c1.2: forwarding parsed data to filter A
The parser Pal uses a data sink interface, here for example an SAX interface XdocumentHandler as will be described in Table 1, to forward the parsed data to the filter A. This interface is generic and not dependent on the concrete document type of the original source data.

Filter A-Z: filtering data
Multiple filter components A to Z can be chained to convert the original source data from the source data format into a format which is readable by the target component, therefore called target data format. Each of these filters provides a XDocumentHandler interface which allows to correspond with the next filter. For example, filter A provides a XDocumentHandler interface for communicating with filter B, while filter B provides a XDocumentHandler interface for dealing with filter C, etc.. Instead of XDocumentHandler interfaces similar interfaces may be used. Each filter can be, for example, "hard coded" or be implemented by XSLT transformations, using an XSL processor and XSL transformation descriptions. Each of these filter components can either transfer one format to another without changing the information itself, or can add or reduce the information contained in the data, for example, by using third data sources like databases or reduction rules. In the following, two examples for filtering are described:

First Filtering Example: outline
One example for data filtering within a filter, like the above filters A to Z, is to strip all detail information from the information contained in the data. This means to forward, for example, only the headings within the text or the titles of diagrams, pictures or tables. This is useful, if the target component TC - above referred to as the computer software program supporting the second data format and running on the second computer system which requests the original source data - is able or programmed to exclusively present an outline of the original source data. This stripping of detailed data reduces the amount of data to be transferred in rt or rc1 to rc3.

Second Filtering Example: layout stripping
Another example for data filtering is to remove all layout and formatting information from the data. This means to forward only the content itself. This may be useful, if the target component TC has no capabilities to display such layouts and formattings. Again, the transferred amount of data in rt or rc1 to rc3 may be reduced.

c1.3: forwarding data between filter components
Each filter component forwards the (partially) converted data to the next filter component by using the XDocumentHandler interface (or similar) of the succeeding filter component. The interfaces between the filter components in this chain are the same and independent from the concrete document type.

c1.4: forwarding data from the last filter component to the printer component
The last filter component within the chain of filter components on the first computer system forwards the (completely) converted data to the printer Pr by the same interface, that means XDocumentHandler or similar. At this point the original source data has been completely converted from the first data format, i.e. the original source data format, into the intermediate data format. From this data format it shall be further converted to the second data format requested by the second computer system or the target component TC, i.e. the software program running on the second computer system which wants to access the original source data, respectively.

Pr (Printer): converting the data into target data
This is a component which converts the internal representation of the converted data in the intermediate data format into a representation in the second data format which can be transferred to the second computer system, because the second data format is supported by this second computer system. For instance, an XML printer can be used. This component also offers the XDocumentHandler interface (or similar) to receive the data. Thus it has a document type independent interface. For instance, the printer Pr can create a text representation of an XML document, a PDF document or a document in the proprietary file format of the target component TC.

Referring to the above used terminology, in this example some or all filters of the chain of filters A to Z would be considered as the first partial adapter, while the printer Pr would be considered to be the second partial adapter. Whether more or less filters of the chain of filters would have to be considered to form the first partial adapter depends on the nature of the filters in the filter chain. If those filters exclusively serve the conversion of the data from the first into the second data format, then the full chain of filters could be regarded as the first partial adapter. However, if some filters in the chain of filters are dedicated to other tasks, for example, stripping information beyond the need specified by the target data format, these filters do not form part of the first partial adapter.

Further partial adapters may be used in the scope of the present invention. In this case, the one or more further partial adapters may convert the data between two or more intermediate data formats. This may be advantageous in certain instances, for example, if it is desired to have the converted data available in more than one intermediate data formats.

Continuing with the description of the steps carried out according to Fig. 13, the data now converted into the second data format, the target data format, is further processed:

c1.5: writing the data in the target data format
The printer Pr uses, for example, a XOutputStream interface to write the data in the target data format to the protocol writer PW. A XOutputStream interface in an interface for sequentially writing data to a target component:
void XOutputStream: : writeData( [in] sequence<byte> aBuffer )
throws IOException

PW (Protocol Writer): writing the target data
The protocol writer PW creates a data file from the obtained target data. Depending on the protocol used to create the target data file, a different protocol writer component PW is used. In this example, a file system writer is created which in turn creates the target file with the target data in the file system of the first computer system.

t1.2: transferring the target data file to the file system of the first computer system
The protocol writer PW creates a file in the file system of the first computer system. By using other protocol writer components any protocol, like HTTP or FTP, can be used to create the file, even on a third computer system being accessible to the first computer system.

D2: target file on first computer system
In this exemplary implementation of the invention a target file contains the target data on the first computer system.

rt: remote transfer from first to second computer system
This is one of the four examples given in the following for the transfer of the converted data to the target system: The data file D2, which is locally stored in the first computer system, is transferred (copied) to the data file D2' on the second computer system.

D2': target file on second computer system
In this implementation example of the invention this target file contains the target data on the second computer system.

rc1 (remote connection 1): remote communication of protocol writer/reader
This is another example for the transfer of the converted data to the target system: A specialized protocol writer PW is used on the first computer system which directly communicates with a specialized protocol reader PR2 on the second computer system.

rc2 (remote connection 2): remote calls to XOutputStream
This is yet another example for the transfer of the converted data to the target system: The printer Pr on the first computer system uses, for example, the interface XOutputStream of the parser Pa2 on the second computer system. In this case, simple data blocks can be transmitted. The advantage may be higher efficiency due to skipping the steps of file writing and reading.

rc3 (remote connection 3): remote calls to XDocumentHandler
This is the fourth example for the transfer of the converted data to the target system: The last filter of the filter chain A to Z on the first computer system uses the interface XDocumentHandler of the importer component I of the target component to forward the data directly. The advantage may be higher efficiency due to skipping the printing and reparsing process steps.

t2.1: transferring the target data into the reader component
Here, the target data file in the target data format can be accessed using direct file access on the second computer system.

PR2: Protocol Reader 2
The protocol reader PR2 on the second computer system reads the target data file created by the process described above from an external representation into the software system. Specialized readers for different protocols may exist, i.e. for FILE, HTTP or FTP.

c2.1: reading the target data
The parser Pa2 reads the data of the target file from the protocol reader PR2 using the interface XInputStream (or similar).

Pa2 (Parser 2): parses the target file
The parser Pa2 parses the target data stream of the target file. For example, this can be an XML parser, which disassembles the target data stream into XML tokens and contents. The XInputStream offered by PR2 and mentioned in c2.1 is used to access the data. Alternatively, the input data could come directly from the printer Pr of the first computer system. In this case, Pr would provide an interface XInputStream (or similar). However, direct (unbuffered) polling data from remote computer systems may not be extremely efficient.

c2.2: forwarding parsed data
The parser Pa2 uses a data sink interface, for example the SAX interface XDocumentHandler, to forward the parsed data to the importer I of the target component TC. The main point is that this interface is generic and not dependent on the concrete document type. Preferably, the same interface is used as in the chain of filter components A to Z.

I (Importer): builds the internal representation of the target data
The importer of the target component TC receives the target data by an interface XDocumentHandler (or similar) and builds the internal representation of the target data, for example a target document. The importer I may be part of the target component TC. In the present example it is separated to give a clearer picture of the process.

c2.3: building the internal representation of the target data
The importer I calls native functions of the target component TC to build the internal presentation of the target data within the target component TC. Here, unspecified interfaces, belonging to the target component TC can be used.

TC (Target Component): for example viewer or editor The target component TC which is used to process the target data can be, for example, a viewer, an editor or any other component which processes data. The target component TC has its own set of interfaces or other methods of receiving the target data. The target component TC may include the importer I, the parser Pa2 or even the protocol reader PR2. Preexistent software can be used on the second computer system, if the target component TC actually contains all of these components I, Pa2 and PR2.

c2.4: displaying the target data
Optionally, the target component TC may use a display component to present the document in a rendered (or any other) form to the user of the second computer system.

User Terminal:
The user terminal can be any output device of the second computer system including, for example, the display or the loudspeaker of a computer or mobile phone.

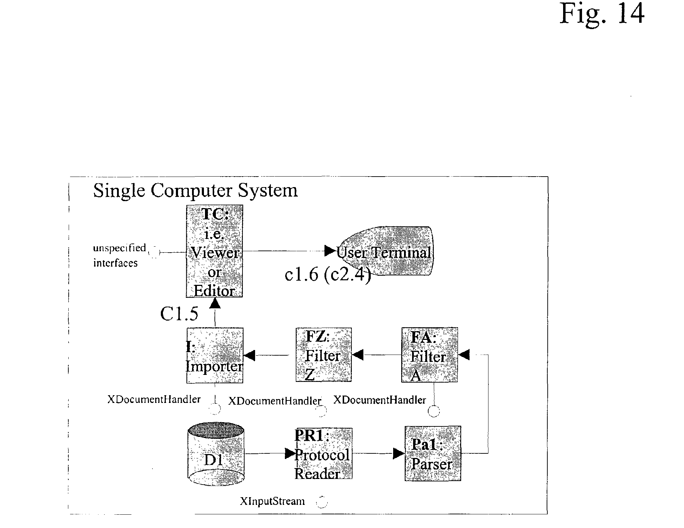

Alternatively to the depicted usage in two computer systems, this invention can be used on a single computer system too, as it is shown in Fig. 14. In this case, the target component TC and the importer component I are on the same computer system as is the filter chain A to Z. The components and the processes presented in Fig. 14 are identical with the corresponding components or processes of Fig. 13. Therefore, reference is made to the above explanations.

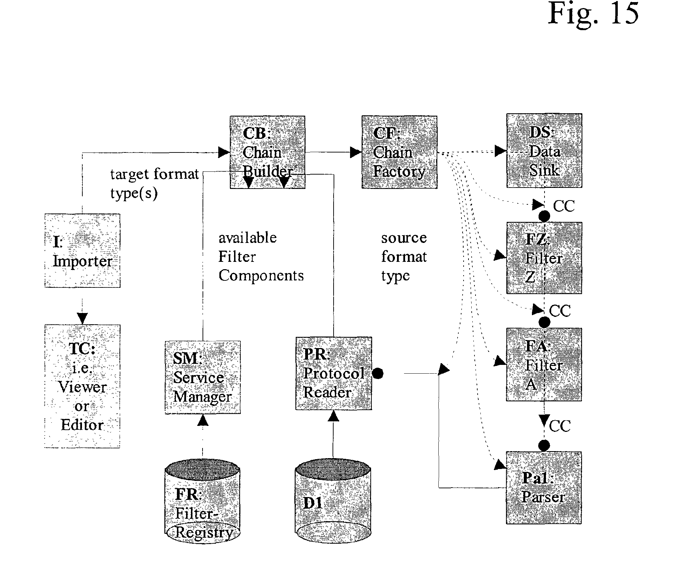

In the following, the process of building the chain of filter components A to Z is described along Fig. 15.

CB: Chain Builder
The chain builder CB gets one or more data format types specified, for example, by a character string identifier like a MIME type or by a DTD identifier from the importer I of the target component TC. Herein, importer I and target component TC may be one single component. Additionally, the chain builder CB sets up a protocol reader PR to get the type of the original source data, specified by the same kind of identifier. Some protocols like HTTP provide a MIME type directly, for other protocols format detection components may be needed which read header information from the original source data file Dl itself. Using the list of filter components, which is available from the registry via the service manager SM, the chain builder CB finds the shortest possible chain of filter components which is suitable for the conversion of data from the first to the second data format.

FR: Filter Registry
The filter registry FR consists of the name of the filter component, the source data format and the target data format specified, for example, by a MIME type or a DTD identifier, of the filter component. The entries may contain quality indicators (priorities).

I: Importer
The importer I of the target component TC provides a list of all possible file formats, again specified, for example, by a MIME type or a DTD identifier. Quality indicators (priority) may be assigned to the data formats.

CF: Chain Factory
The chain factory CF takes a descriptive representation of the filter chain, for example, a list of components specified by their service or implementation name. Based on this description the components are created using the service manager SM. The first component of the chain, the protocol reader PR, is already existent at this time. Finally, the chain factory CF creates the chain by connecting the newly created components together. This can be done by setting the SAX interface XDocumentHandler of each successor filter component to the predecessor's filter component.

CC: Chain Connection
The chain connections CC are built by an interface which represents the basic structure of hierarchical documents. The preferred interface for these connections is the SAX interface XdocumentHandler. In the following Table 1 the methods of the SAX interface XDocumentHandler are described:

**Table 1:**

| characters | |
|---|---|
| Syntax | void characters([] string aChars); |
| Description | Receive notification of character data. |
| Arguments | string aChars : |
| | |

| endDocument | |
|---|---|
| Syntax | void endDocument(); |
| Description | Receive notification of the end of a document. |
| | |

| endElement | |
|---|---|
| Syntax | void endElement([] string aName); |
| Description | Receive notification of the end of an element. |
| Arguments | string aName : |
| | |

| ignorableWhitespace | |
|---|---|
| Syntax | void ignorableWhitespace([] string a Whitespaces); |
| Description | Receive notification of ignorable whitespace in element content. |
| Arguments | string a Whitespaces : |
| | |

| processingInstruction | |
|---|---|
| Syntax | void processingInstruction([] string aTarget,[] string aData ); |
| Description | Receive notification of a processing instruction. |
| Arguments | string a Target: string aData : |
| | |

| setDocumentLocator | |
|---|---|
| Syntax | void setDocumentLocator([] XLocator xLocator ); |
| Description | Receive an object for locating the origin of SAX document events. |
| Arguments | XLocator xLocator : |
| | |

| startDocument | |
|---|---|
| Syntax | void startDocument(); |
| Description | Receive notification of the beginning of a document. |
| | |

| startElement | |
|---|---|
| Syntax | void startElement([] string aName,[] XAttributeList xAttribs ); |
| Description | Receive notification of the beginning of an element . |
| Arguments | string aName : XAttributeList xAttribs : |

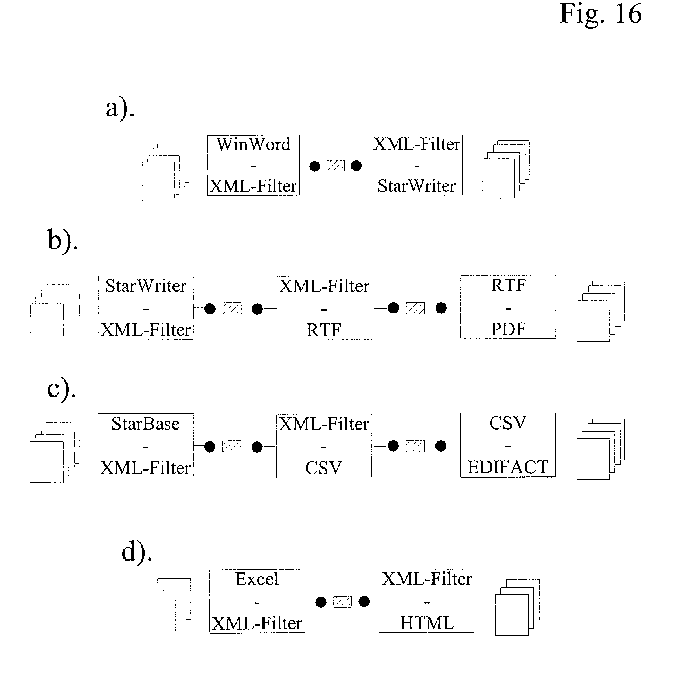

In Fig. 16 examples for converting documents from one data format into another data format are shown. In Fig. 16a a document in the WinWord format is requested in the StarWriter format. This converting may be achieved, for example, by employing one partial adapter for converting a WinWord document into a XML format and another partial adapter for converting the document in the XML format into the StarWriter format.

For most kind of documents there is one intermediate data format established. In the example in Fig. 16b the RTF format (Rich Text Format) is used as an intermediate data format to convert a text document in StarWriter format into a document in the PDF (Portable Document Format) format. For the conversion of a document from the StarWriter format into the PDF format three partial adapter may be employed. The first partial adapter may convert the StarWriter document into a XML format, the second partial adapter may convert the document in the XML format into the intermediate data format RTF and the third partial adapter may convert the RTF document into the PDF format. A similar situation is described in Fig. 16c. In this example, a XML format and the CSV (Comma Separated Value) format are employed as intermediate data formats in order to achieve proper converting from the StarBase format into the EDIFACT (Electronical Data Interchange) format.

In Fig. 16d it is shown that the first data format and the second data format do not need to be comparable. For example, if the converting of the document is requested only for viewing and not for editing the document, a conversion form the Excel format into the HTML format may be convenient. Such a conversion may only be possible in one direction.

It will be understood that the present invention is not limited to the examples given and explained in detail.

This application is related to commonly filed and commonly assigned EP Patent Application "A NETWORK PORTAL SYSTEM AND METHODS" of Matthias Hütsch, Ralf Hofmann and Kai Sommerfeld (Attorney Docket No. 85880), which is incorporated herein by reference in its entirety.

## Claims

1. A computer-based method comprising:
receiving a request for data;
retrieving, from a filter registry in response to said request, a rule set for a plurality of partial filter adapters wherein, upon being chained together said plurality of partial filter adapters converts source data to said data; and
building a filter using said rule set wherein said filter comprises a chain of said plurality of partial filter adapters wherein each partial filter adapter includes a generic format independent interface and said generic format independent interface is used in passing data from one partial filter adapter in said plurality of partial filter adapters to another partial filter adapter in said plurality of partial filter adapters.

2. A method according to Claim 1 wherein said filter renders the source data in a different way to produce said data.

3. A method according to Claim 1 wherein said filter converts said source data from a first format to a second format.

4. A method according to Claim 3 wherein a device from which said request for data was issued supports at least two data formats, and said method further comprises:
selecting said second data format from said at least two data formats.

5. A method according to Claim 4, wherein said selecting said second data format further comprises:
using a selection scheme including at least one of the following criterion: storage space required by said data in each of said two data formats supported by said process; conversion time for said data from said first data format into each of said data formats supported by said process; and a quality for each of said two data formats.

6. The method of Claim 1 further comprising converting said source data to said data using said filter.

7. The method of Claim 1 wherein said generic format independent interface is a Simple API for XML interface.

8. The method of Claim 1 wherein said partial filter adapters comprise a general partial filter adapter having functionality determined by a parameter.

9. The method of Claim 8 wherein said general partial filter adapter comprises an eXtensible Style sheet Language Transformation processor, and said parameter comprises an eXtensible Style sheet Language Transformation script.

10. A computer program product comprising a medium configured to store or transport computer readable code for a method comprising:
receiving a request for data;
retrieving, from a filter registry in response to said request, a rule set for a plurality of partial filter adapters wherein, upon being chained together said plurality of partial filter adapters converts source data to said data; and
building a filter using said rule set wherein said filter comprises a chain of said plurality of partial filter adapters wherein each partial filter adapter includes a generic format independent interface and said generic format independent interface is used in passing data from one partial filter adapter in said plurality of partial filter adapters to another partial filter adapter in said plurality of partial filter adapters.

11. A computer program product as in Claim 10 wherein said filter renders the source data in a different way to produce said data.

12. A computer program product as in Claim 10 wherein said filter converts said source data from a first format to a second format.

13. A computer-based method comprising:
receiving a request for data having a first format from a process requiring data in a second format;
retrieving, from a filter registry in response to said request, a rule set for a plurality of partial filter adapters wherein, upon being chained together said plurality of partial filter adapters converts said data from said first format to said second format; and
building a filter using said rule set wherein said filter comprises a chain of said plurality of partial filter adapters wherein each partial filter adapter includes a generic format independent interface and said generic format independent interface is used in passing data from one partial filter adapter in said plurality of partial filter adapters to another partial filter adapter in said plurality of partial filter adapters.

14. A method according to Claim 13 further comprising selecting said second data format from at least two data formats supported by said process.

15. A method according to Claim 14, wherein said selecting said second data format further comprises:
using a selection scheme including at least one of the following criterion: storage space required by said data in each of said two data formats supported by said process; conversion time for said data from said first data format into each of said data formats supported by said process; and a quality for each of said two data formats.

16. The method of Claim 13 further comprising converting said data in said first format to data in said second format using said filter.

17. The method of Claim 13 wherein said generic format independent interface is a Simple API for XML interface

18. The method of Claim 13 wherein said partial filter adapters comprise a general partial filter adapter having functionality determined by a parameter.

19. The method of Claim 18 wherein said general partial filter adapter comprises an eXtensible Style sheet Language Transformation processor, and said parameter comprises an eXtensible Style sheet Language Transformation script.

20. A structure comprising:
a partial filter adapter library;
a partial filter adapter registry wherein said partial filter adapter registry includes a rule set; and
a filter server coupled to said partial filter adapter registry and to said partial filter adapter library, wherein said filter server uses said rule set to build a filter using a plurality of partial filter adapters from said partial filter adapter library.

21. A structure comprising:
a first partial filter adapter having a generic format independent interface; and
a second partial filter adapter having said generic format independent interface coupled to said first partial filter adapter.

22. The structure of Claim 21 wherein said generic format independent interface is a simple API for XML interface.

23. The structure of Claim 22 wherein said simple API for XML interface is a XML document handler interface.

24. A method for rendering accessible data stored in a first data format in a first computer system for a second computer system supporting a second data format, said method comprising:
receiving in said first computer system a request from said second computer system for said data;
receiving in said first computer system information about at least one data format supported by said second computer system, selecting said second data format, if said first computer system was informed about more than one data format supported by said second computer system;
comparing in said first computer system said first data format with said second data format,
generating a filter for converting said data from said first data format into said second data format, if said first data format is incompatible with said second data format, by combining a first partial filter adapter to a second partial adapter for the transformation of data; and
converting said data in said first computer system using said filter from said first data format into said second data format.

25. A method for generating an adapter for converting data from a first data format to a second data format, comprising the steps of:
a) selecting from an adapter library a first partial adapter for converting said data from said first data format to an intermediate data format,
b) selecting from said adapter library a second partial adapter for converting said data from said intermediate data format to said second data format, and
c) combining said first partial adapter and said second partial adapter to generate said adapter for converting said data from said first data format to said second data format.

26. A method according to claim 25, wherein said adapter is generated in response to a command of a software program supporting said second data format to access said data being stored in said first data format.

27. A method according to one of the claims 25 or 26, comprising the further step of selecting said second data format from at least two data formats supported by said software program.

28. A method according to one of the claims 25 - 27, wherein said selection of said second data format is based on a selection scheme using at least one of the following criteria: storage space required by said data in each of said data formats supported by said software program, conversion time for said data from said first data format into each of said data formats supported by said software program, quality of said conversion.

29. A method of using an adapter generated according to any of the claims 25 - 28 for converting data from a first data format into a second data format.

30. A method for rendering accessible data stored in a first data format in a first computer system to a second computer system supporting a second data format, comprising the steps of:
a) receiving in said first computer system a request from said second computer system for said data,
b) receiving in said first computer system information about at least one data format supported by said second computer system,
c) selecting said second data format, if in step b) said first computer system was informed about more than one data format supported by said second computer system,
d) comparing in said first computer system said first data format with said second data format,
e) generating an adapter for converting said data from said first data format into said second data format, if said first data format is incompatible with said second data format, by combining a first partial adapter for the transformation of data from said first data format to an intermediate data format and a second partial adapter for the transformation of data from said intermediate data format to said second data format,
f) converting said data in said first computer system by means of said generated adapter from said first data format into said second data format,
g) transmitting said converted data from said first computer system to said second computer system.

31. A method for rendering accessible data stored in a first data format in a first computer system to a second computer system supporting a second data format, comprising the steps of:
a) receiving in said first computer system a request from said second computer system for said data,
b) informing said second computer system about said first data format of said requested data,
c) selecting said second data format, if said second computer system supports more than one data format,
d) comparing said first data format with said second data format,
e) generating an adapter for converting said data from said first data format into said second data format, if said first data format is incompatible with said second data format, by combining a first partial adapter for the transformation of data from said first data format to an intermediate data format and a second partial adapter for the transformation of data from said intermediate data format to said second data format,
f) converting said data by means of said generated adapter from said first data format into said second data format,
g) accessing said converted data by said second computer system.

32. A method for rendering accessible data stored in a first data format in a first computer system to a second computer system supporting a second data format, comprising the steps of:
a) receiving in said first computer system a request from said second computer system for said data,
b) transmitting said requested data from said first computer system to said second computer system,
c) so that said second computer system is able to select said second data format, if it supports more than one data format,
d) wherein said second computer system is able to compare said first data format with said second data format,
e) wherein said second computer system is able to generate an adapter for converting said data from said first data format into said second data format, if said first data format is incompatible with said second data format, by operatively connecting a first partial adapter for the transformation of data from said first data format to an intermediate data format and a second partial adapter for the transformation of data from said intermediate data format to said second data format,
f) wherein said second computer system is able to convert said data by means of said generated adapter from said first data format into said second data format.

33. A method for using a second computer system supporting a second data format for accessing data being stored in a first data format on a first computer system, comprising the following steps:
a) requesting from said first computer system said data,
b) informing said first computer system about at least one data format supported by said second computer system,
c) so that said first computer system is able to select said second data format, if it was informed about more than one data format supported by said second computer system,
d) wherein said first computer system is able to compare said first data format with said second data format,
e) wherein said first computer system is able to generate an adapter for converting said data from said first data format into said second data format, if said first data format is incompatible with said second data format, by operatively connecting a first partial adapter for the transformation of data from said first data format to an intermediate data format and a second partial adapter for the transformation of data from said intermediate data format to said second data format,
f) wherein said first computer system is able to convert said data by means of said generated adapter from said first data format into said second data format,
g) receiving said converted data from said first computer system in said second computer system.

34. A method for using a second computer system supporting a second data format for accessing data being stored in a first data format on a first computer system, comprising the following steps:
a) requesting from said first computer system said data,
b) receiving said requested data from said first computer system in said second computer system,
c) selecting said second data format, if said second computer system supports more than one data format,
d) comparing in said second computer system said first data format with said second data format,
e) generating an adapter for converting said data from said first data format into said second data format, if said first data format is incompatible with said second data format, by combining a first partial adapter for the transformation of data from said first data format to an intermediate data format and a second partial adapter for the transformation of data from said intermediate data format to said second data format,
f) converting said data in said second computer system by means of said generated adapter from said first data format into said second data format.

35. A method according to any of claims 30, 31 or 33, wherein in step b) said information about said at least one data format supported by said second computer system is provided indirectly by providing information about a software module on said second computer system destined to process said data.

36. A method according to any of claims 30 - 35, wherein said second data format is selected according to a selection scheme using at least one of the following criteria: storage space required by said data in each of said data formats supported by said second computer system, transmission time from said first computer system to said second computer system for said data in each of said data formats supported by said second computer system, conversion time for said data from said first data format into each of said data formats supported by said second computer system.

37. A method according to any of the claims 25 - 36, wherein said intermediate data format is the format of an extensible markup language (XML).

38. A method according to any of the claims 25 - 37, wherein at least one of said partial adapters is bi-directional.

39. A method according to any of the claims 25 - 38, wherein at least one further partial adapter is used for converting said data from said intermediate data format into a further intermediate data format, wherein said first partial adapter is able to convert said data from said first data format into said intermediate data format and said second partial adapter is able to convert said data from said further intermediate data format into said second data format.

40. A computer program product for carrying out a method according to any of the claims 25 - 39 on a computer system.

41. A data carrier for storing a computer program product for carrying out a method according to any of the claims 25 - 39 on a computer system.

42. A method for using a computer system for carrying out a method according to any of the claims 25 - 39.

43. A stored data structure, comprising a set of partial adapters, wherein each partial adapter of said set of partial adapters is capable of converting data between a certain data format and an intermediate data format.

44. A stored data structure according to claim 43, wherein each partial adapter being capable of converting data between a first data format and said intermediate data format may be combined with each other partial adapter being capable of converting data between a second data format and said intermediate data format in order to produce an adapter being capable of converting data between said first data format and said second data format.
